# EUROPEAN PATENT SPECIFICATION

(11) **EP 4 081 976 B1**
(45) Date of publication and mention of the grant of the patent: **07.05.2025**
(21) Application number: 20908381.5
(22) Date of filing: 23.12.2020
(51) Int. Cl.: G06F 3/04817, G06F 3/04842, G06F 3/0485, G06F 3/0488, G06Q 10/107, G06Q 50/00, H04L 51/043, G01C 21/36

(54) **EXPRESSIVE USER ICONS IN A MAP-BASED MESSAGING SYSTEM INTERFACE**
EXPRESSIVE BENUTZERSYMBOLE IN EINER KARTENBASIERTEN SCHNITTSTELLE EINES NACHRICHTENÜBERMITTLUNGSYSTEMS
ICÔNES D'UTILISATEUR EXPRESSIVES DANS UNE INTERFACE DE SYSTÈME DE MESSAGERIE BASÉE SUR UNE CARTE

(30) Priority: 27.12.2019 US 201962954314 P; 31.03.2020 US 202016836797
(43) Date of publication of application: 02.11.2022
(73) Proprietor: Snap Inc., Santa Monica, California 90405 (US)
(72) Inventor: AL MAJID, Newar Husam, Santa Monica, California 90405 (US); DESSERREY, Laurent, Santa Monica, California 90405 (US); GIOVANNINI, Donald, Santa Monica, California 90405 (US); RAKHAMIMOV, Daniel, Santa Monica, California 90405 (US)
(74) Representative: Kramer, Dani
(86) International application number: PCT/US2020/066920
(87) International publication number: WO 2021/133960

(56) References cited:
- JP-A- 2014 146 357
- KR-A- 20190 073 032
- US-A1- 2007 204 218
- US-A1- 2012 096 403
- US-A1- 2012 290 978
- US-A1- 2013 158 873
- US-A1- 2016 085 773
- US-A1- 2018 350 144
- US-A1- 2019 282 903
- US-A1- 2019 282 903
- US-B1- 7 468 729

## Description

### CLAIM OF PRIORITY

This application claims the benefit of priority to U.S. Provisional Application Serial No. 62/954,314, filed on December 27, 2019, and U.S. Patent Application Serial No. 16/836,797, filed on March 31, 2020.

### BACKGROUND

Messaging systems for social media platforms often implement computer-mediated technologies allowing for the creating and sharing of content that communicates information, ideas, career interests, and other forms of expression via virtual communities and networks. Social media platforms use web-based technologies, desktop computers, and mobile technologies (e.g., smart phones and tablet computers) to create highly interactive platforms through which individuals, communities, and organizations can share, co-create, discuss, and modify user-generated content or pre-made content posted online.

Mobile electronic devices on which end-user social media applications can be executed typically provide geolocation services that determine the geographic location of the mobile electronic device, by extension indicating the geographic location of the associated user. In instances where such messaging applications include a map-based graphical user interface, a user's physical location is often represented on the map by a corresponding user icon uniquely associated with the relevant user.

US 2019/282903 A1 describes a method for generating collectible media content items based on location information, which method starts with processor receiving location information from location sensor coupled to first client computing device. US 2007/204218 A1 discloses a user-defined private map presenting method for a cellular phone comprising the steps of: importing public map of area/location, creating user-defined private map, and linking user-defined private maps to public map through set of user icons.

### SUMMARY OF THE INVENTION

The invention is defined by the features of the independent claims. Further aspects of the invention are the subject of the dependent claims.

According to an aspect of the present disclosure, there is described a method comprising: accessing user representation data for a user of a social media platform, the user representation data indicating: location information indicating a geographic location of a specific client device associated with the user; a user icon configured to provide a visual representation of the user; and a status indicator configured to provide a visual indication of a current status associated with the user, the status indicator having an associated direct action triggerable by selection of a combined icon of which it forms part, wherein the status indicator is selected from a plurality of different status indicators having different associated direct actions; accessing map data associated with the geographic location indicated by the location information; in an automated operation based at least in part on the map data and performed using one or more computer processor devices configured therefor, causing generation of a map-based graphical user interface (GUI) for the social media platform, the map-based GUI comprising an interactive map that includes the indicated geographic location; causing display on the interactive map of the combined icon visually representing the user at a display location based on the indicated geographic location, the combined icon comprising the user icon and the status indicator; and responsive to user selection of the combined icon, automatically initiating the direct action associated with the status indicator.

### BRIEF DESCRIPTION OF THE DRAWINGS

To easily identify the discussion of any particular element or act, the most significant digit or digits in a reference number refer to the figure number in which that element is first introduced.
FIG. 1 is a diagrammatic representation of a networked environment in which the present disclosure may be deployed, in accordance with some example embodiments.
FIG. 2 is a diagrammatic representation of a messaging system, in accordance with some examples, that has both client-side and server-side functionality.
FIG. 3 is a diagrammatic representation of a data structure as maintained in a database, in accordance with some examples.
FIG. 4 is a diagrammatic representation of a message, in accordance with some examples.
FIG. 5 is a diagrammatic representation of a social media messaging system in accordance with some examples.
FIG. 6 is a schematic view of a client device providing a map-based graphical user interface for a social media messaging application, according to some examples.
FIGS. 7A-7J are screenshots of a map-based graphical user interface for generating and displaying combined expressive icons according to some examples.
FIG. 8 is a flowchart for a method of generating a messaging application map-based GUI in which the user is represented by a combined expressive icon, according to some examples.
FIG. 9 is a flowchart for a method of providing a map-based GUI for a social media messaging application, according to some examples.
FIG. 10 is a diagrammatic representation of a machine in the form of a computer system within which a set of instructions may be executed for causing the machine to perform any one or more of the methodologies discussed herein, in accordance with some examples.
FIG. 11 is a block diagram showing a software architecture within which examples may be implemented.
FIG. 12 is a diagrammatic representation of a processing environment, in accordance with some examples.

### DETAILED DESCRIPTION

This disclosure provides for the representation of a user in a geographical map-based graphical user interface (GUI) by a combined icon that includes both a user icon (e.g., an anthropomorphic avatar) and a status indicator with respect to a current status of the user. The user icon may in some embodiments be an expressive icon that represents the user as bearing a particular distinct facial expression (e.g., happy, sad, inquisitive, agitated, etc.) or performing a particular physical action (e.g., driving, listening to music, eating, etc.). In such cases, the resulting combined expressive icon visually communicates two or more aspects of the relevant user's current emotional state, activity, environment, and status.

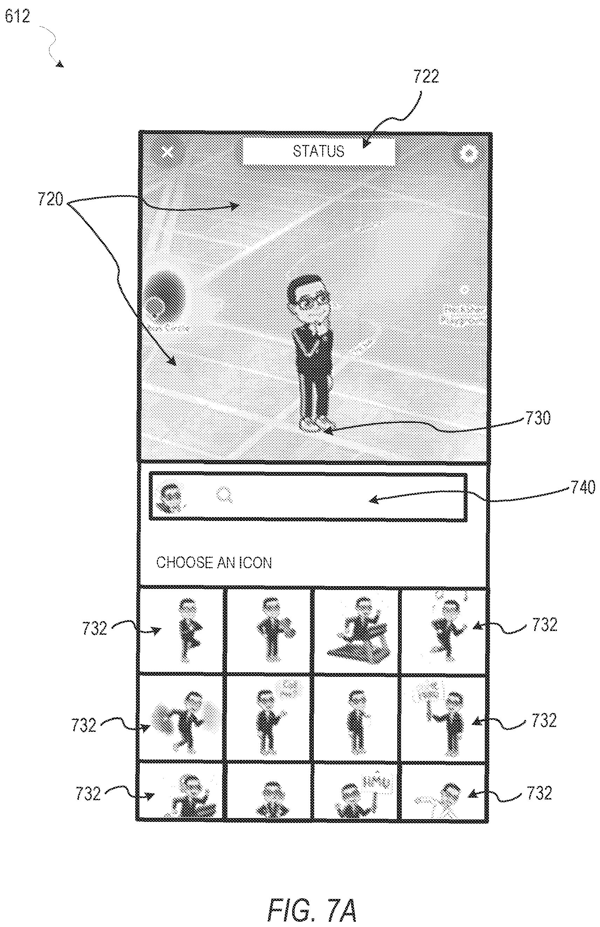

Some embodiments particularly describe a map-based GUI for a social media platform or application, to allow user access to map-based location information with expressive icons having status indicators for users. Various systems, methods, instructions, and user interface details are described below with reference to FIGS. 7A-9 for generating such expressive icons with status indicators and presenting them in a map-based GUI.

For example, in some embodiments a social networking system is authorized by users and user selectable settings to track locations of user devices, and to share this information with other users. A map-based GUI with information on device locations can be presented to a user on a display of the user's client device. An expressive icon with a particular user's features is one way to present readily via a map more information than merely the user's location. As mentioned previously, an example of such an expressive user icon is an avatar selected and configured by the user to be visually representative of the user (e.g., a Bitmoji, customized to have the particular user's gender, hair color and style, facial features, etc.) and which visually expresses a particular emotion, state of mind, action, or combination of these. Thus, an expressive icon can in some embodiments be a user avatar that is celebrating, an avatar that is angry, an avatar that is skateboarding, an avatar that is eating, and so forth.

This disclosure provides for immediate visual communication of yet more information about the user by displaying in combination with the user icon a status indicator that indicates a current status of the user. Thus, the status indicator is in some embodiments used with the expressive icon to generate a combined expressive icon. The status indicator is in some examples a text-based indication of the user's current status. The status indicator can thus in some example embodiments textually communicate: what the user is currently doing; whether or not the user is available for online communication; the user's current emotion, feeling, or state of mind; or the like. The text-based status indicator is in some embodiments stylized in a manner reflective of the content of the text. It will be appreciated that such a combined expressive icon allows for communication of significantly more complex and rich information than is the case with only a user icon or an expressive user icon.

In some embodiments, the combined expressive user icon is an interactive user interface (UI) element that is selectable to trigger or facilitate direct actions particularly associated with the status indicator. In such embodiments, different status indicators that are available for combining with an expressive user icon can have different respective direct actions that are accessible by selecting the resulting combined expressive icon. In one embodiment, for example, a sleep status indicator in a combined icon is selectable to automatically initiate a communication with a do-not-disturb element (e.g. communicating after a sleep period is expected to end). In another example, an activity indicator in a combined icon automatically initiates directions to the activity in a map interface, displaying routing information to guide the user to the corresponding activity. In such a system that displays icons for device locations, information communicated in a map interface can be significantly expanded by the techniques herein disclosed, and user interface actions tailored to associated status indicators and activities can be reduced by linking actions available to the status indicated by a combined map icon.

Embodiments described herein thus improve the operation of a client device presenting a map-based GUI by increasing the information density presented in the GUL Further, additional functionality and a streamlined flow of user operations are provided within the map interface by the provision of tailored interfaces launchable by interaction with the combined user icon, with the action associated with a map icon tailored to a status indicator used for a combined icon. By providing different icons with different associated actions, while allowing the icon to present the relevant complex information by combining an expressive user representation (e.g., avatar) with status indicator data, a user can perform actions faster and with fewer inputs.

Such a map-based GUI can include combined icons for many different user accounts, with each icon representing approximate respective positions of a user's friends or devices for connected accounts in a social network graph. A respective combined expressive icon described above can be displayed for each user, with a customized action interface for each icon being accessible via the status indicator for each combined icon.

In some embodiments, both the expressive user icon and the status indicator that together form a combined expressive icon is wholly user-selectable, with the user selecting a particular expressive icon from a plurality of icon options presented in an icons selection interface, and the user selecting a particular status indicator from a plurality of status indicator options presented in a status selection interface.

Instead, or in addition, one or both of the expressive icon and the status indicator can be automatically selected based on contextual data associated with the relevant client device. For example, based on identification of a traveling speed and a location coinciding with a roadway, the expressive icon can automatically be selected to show the avatar driving a vehicle. Similarly, identification of the client device as being located in a restaurant in one example embodiment automatically triggers selection of an expressive icon showing the avatar with eating utensils. Instead, or in addition, such contextual data is in some example embodiments used to automatically select one or both of a subset of expressive icons displayed in the icons selection interface and a subset of status indicators presented in the status selection interface. For example, identification of the user's being located in a restaurant automatically results in presentation in the icon selection interface of a plurality of expressive icons related specifically to food or eating.

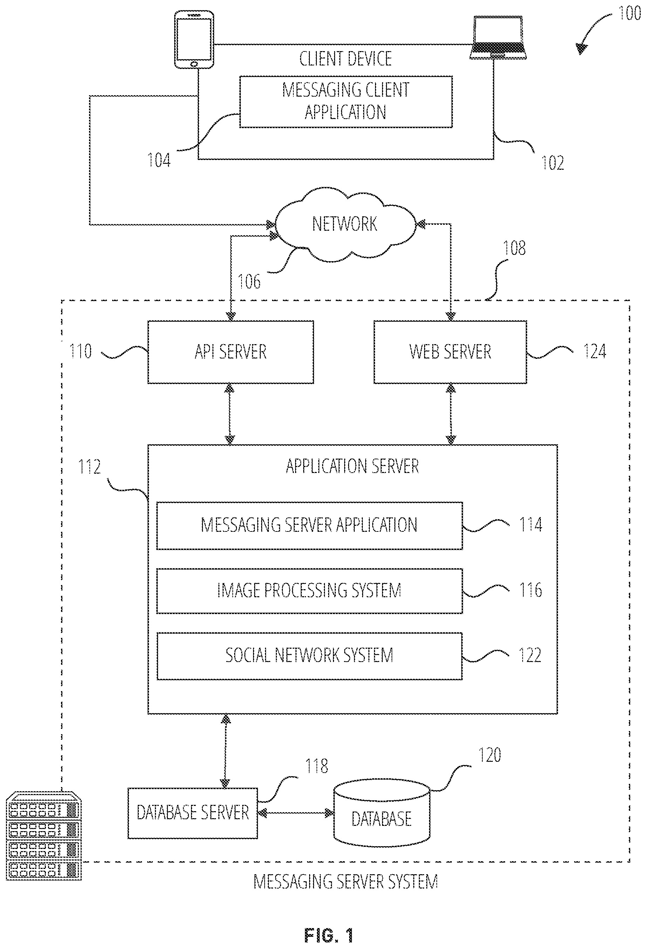

FIG. 1 is a block diagram showing an example messaging system 100 for exchanging data (e.g., messages and associated content) over a network. The messaging system 100 includes multiple instances of a client device 102, each of which hosts a number of applications, including a messaging client application 104. Each messaging client application 104 is communicatively coupled to other instances of the messaging client application 104 and a messaging server system 108 via a network 106 (e.g., the Internet).

A messaging client application 104 is able to communicate and exchange data with another messaging client application 104 and with the messaging server system 108 via the network 106. The data exchanged between messaging client application 104, and between a messaging client application 104 and the messaging server system 108, includes functions (e.g., commands to invoke functions) as well as payload data (e.g., text, audio, video or other multimedia data).

The messaging server system 108 provides server-side functionality via the network 106 to a particular messaging client application 104. While certain functions of the messaging system 100 are described herein as being performed by either a messaging client application 104 or by the messaging server system 108, the location of certain functionality either within the messaging client application 104 or the messaging server system 108 may be a design choice. For example, it may be technically preferable to initially deploy certain technology and functionality within the messaging server system 108 but to later migrate this technology and functionality to the messaging client application 104 where a client device 102 has sufficient processing capacity.

The messaging server system 108 supports various services and operations that are provided to the messaging client application 104. Such operations include transmitting data to, receiving data from, and processing data generated by the messaging client application 104. This data may include message content, client device information, geolocation information, media augmentation and overlays, message content persistence conditions, social network information, and live event information, as examples. Data exchanges within the messaging system 100 are invoked and controlled through functions available via user interfaces (UIs) of the messaging client application 104.

Turning now specifically to the messaging server system 108, an Application Program Interface (API) server 110 is coupled to, and provides a programmatic interface to, an application server 112. The application server 112 is communicatively coupled to a database server 118, which facilitates access to a database 120 that stores data associated with messages processed by the application server 112. Similarly, a web server 124 is coupled to the application server 112, and provides web-based interfaces to the application server 112. To this end, the web server 124 processes incoming network requests over the Hypertext Transfer Protocol (HTTP) and several other related protocols.

The Application Program Interface (API) server 110 receives and transmits message data (e.g., commands and message payloads) between the client device 102 and the application server 112. Specifically, the Application Program Interface (API) server 110 provides a set of interfaces (e.g., routines and protocols) that can be called or queried by the messaging client application 104 in order to invoke functionality of the application server 112. The Application Program Interface (API) server 110 exposes various functions supported by the application server 112, including account registration, login functionality, the sending of messages, via the application server 112, from a particular messaging client application 104 to another messaging client application 104, the sending of media files (e.g., images or video) from a messaging client application 104 to a messaging server application 114, and for possible access by another messaging client application 104, the settings of a collection of media data (e.g., story), the retrieval of a list of friends of a user of a client device 102, the retrieval of such collections, the retrieval of messages and content, the addition and deletion of entities (e.g., friends) to an entity graph (e.g., a social graph), the location of friends within a social graph, and opening an application event (e.g., relating to the messaging client application 104).

The application server 112 hosts a number of applications and subsystems, including a messaging server application 114, an image processing system 116, and a social network system 122. The messaging server application 114 implements a number of message processing technologies and functions, particularly related to the aggregation and other processing of content (e.g., textual and multimedia content) included in messages received from multiple instances of the messaging client application 104. As will be described in further detail, the text and media content from multiple sources may be aggregated into collections of content (e.g., called stories or galleries). These collections are then made available, by the messaging server application 114, to the messaging client application 104. Other processor and memory intensive processing of data may also be performed server-side by the messaging server application 114, in view of the hardware requirements for such processing.

The application server 112 also includes an image processing system 116 that is dedicated to performing various image processing operations, typically with respect to images or video within the payload of a message sent from or received at the messaging server application 114.

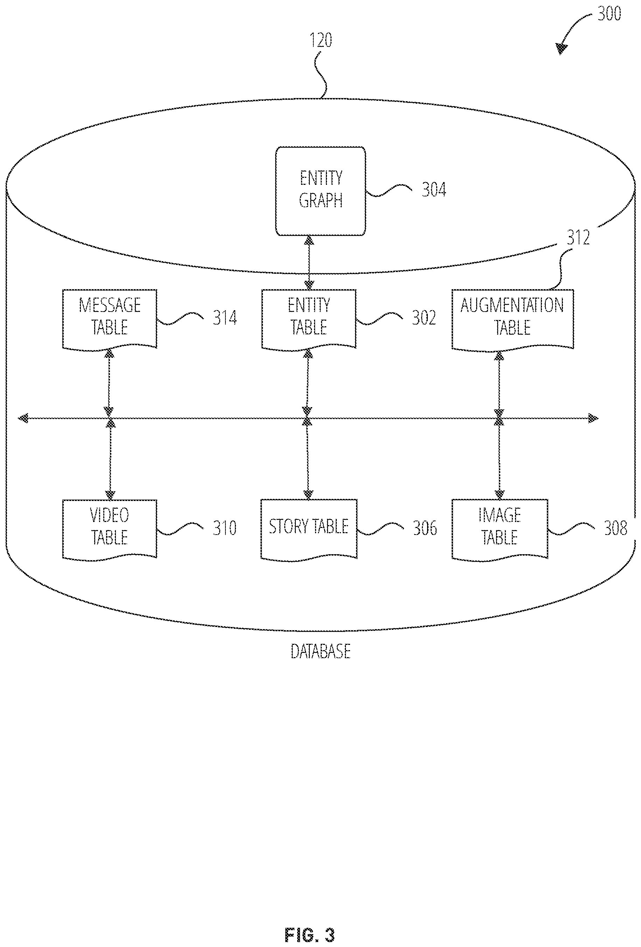

The social network system 122 supports various social networking functions and services and makes these functions and services available to the messaging server application 114. To this end, the social network system 122 maintains and accesses an entity graph 304 (as shown in FIG. 3) within the database 120. Examples of functions and services supported by the social network system 122 include the identification of other users of the messaging system 100 with which a particular user has relationships or is "following,"," and also the identification of other entities and interests of a particular user.

The application server 112 is communicatively coupled to a database server 118, which facilitates access to a database 120 in which is stored data associated with messages processed by the messaging server application 114.

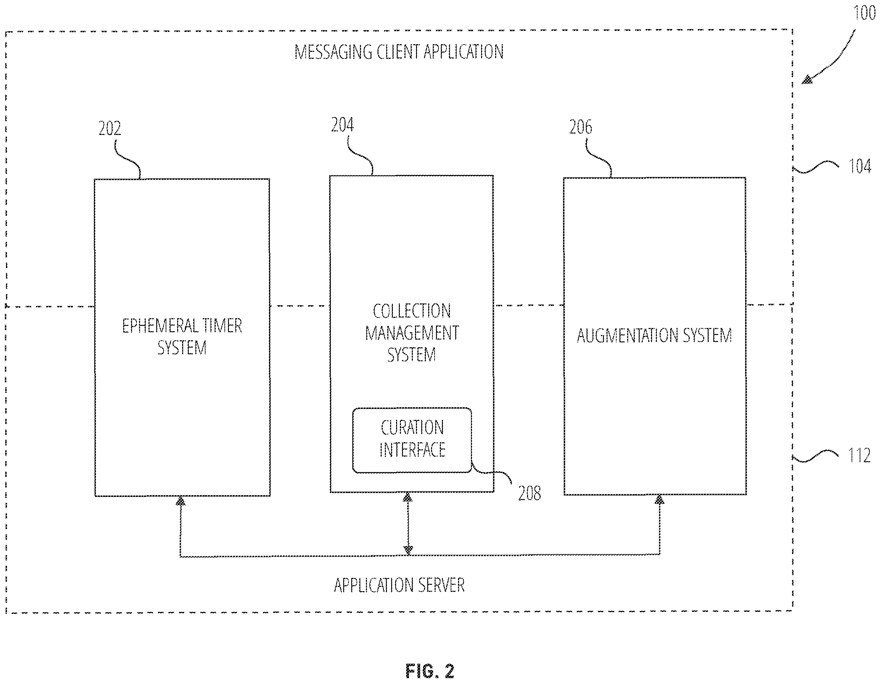

FIG. 2 is a block diagram illustrating further detail s regarding the messaging system 100, according to some examples. Specifically, the messaging system 100 is shown to comprise the messaging client application 104 and the application server 112, which in turn embody a number of subsystems, namely an ephemeral timer system 202, a collection management system 204, and an augmentation system 206.

The ephemeral timer system 202 is responsible for enforcing the temporary access to content permitted by the messaging client application 104 and the messaging server application 114. To this end, the ephenieral timer system 202 incorporates a number of timers that, based on duration and display parameters associated with a message, or collection of messages (e.g., a story), selectively display and enable access to messages and associated content via the messaging client application 104. Further details regarding the operation of the ephemeral timer system 202 are provided below.

The collection management system 204 is responsible for managing collections of media (e.g., collections of text, image video, and audio data). A collection of content (e.g., messages, including images, video, text, and audio) may be organized into an "event gallery" or an "event story." Such a collection may be made available for a specified time period, such as the duration of an event to which the content relates. For example, content relating to a music concert may be made available as a "story" for the duration of that music concert. The collection management system 204 may also be responsible for publishing an icon that provides notification of the existence of a particular collection to the user interface of the messaging client application 104.

The collection management system 204 furthermore includes a curation interface 208 that allows a collection manager to manage and curate a particular collection of content. For example, the curation interface 208 enables an event organizer to curate a collection of content relating to a specific event (e.g., delete inappropriate content or redundant messages). Additionally, the collection management system 204 employs machine vision (or image recognition technology) and content rules to automatically curate a content collection. In certain examples, compensation may be paid to a user for the inclusion of user-generated content into a collection. In such cases, the collection management system 204 operates to automatically make payments to such users for the use of their content.

The augmentation system 206 provides various functions that enable a user to augment (e.g., annotate or otherwise modify or edit) media content associated with a message. For example, the augmentation system 206 provides functions related to the generation and publishing of media overlays for messages processed by the messaging system 100. The augmentation system 206 operatively supplies a media overlay or augmentation (e.g., an image filter) to the messaging client application 104 based on a geolocation of the client device 102. In another example, the augmentation system 206 operatively supplies a media overlay to the messaging client application 104 based on other information, such as social network information of the user of the client device 102. A media overlay may include audio and visual content and visual effects. Examples of audio and visual content include pictures, texts, logos, animations, and sound effects. An example of a visual effect includes color overlaying. The audio and visual content or the visual effects can be applied to a media content item (e.g., a photo) at the client device 102. For example, the media overlay may include text that can be overlaid on top of a photograph taken by the client device 102. In another example, the media overlay includes an identification of a location overlay (e.g., Venice beach), a name of a live event, or a name of a merchant overlay (e.g., Beach Coffee House). In another example, the augmentation system 206 uses the geolocation of the client device 102 to identify a media overlay that includes the name of a merchant at the geolocation of the client device 102. The media overlay may include other indicia associated with the merchant. The media overlays may be stored in the database 120 and accessed through the database server 118.

In one example, the augmentation system 206 provides a user-based publication platform that enables users to select a geolocation on a map and upload content associated with the selected geolocation. The user may also specify circumstances under which a particular media overlay should be offered to other users. The augmentation system 206 generates a media overlay that includes the uploaded content and associates the uploaded content with the selected geolocation.

In another example, the augmentation system 206 provides a merchant-based publication platform that enables merchants to select a particular media overlay associated with a geolocation via a bidding process. For example, the augmentation system 206 associates the media overlay of the highest bidding merchant with a corresponding geolocation for a predefined amount of time.

FIG. 3 is a schematic diagram illustrating data structures 300, which may be stored in the database 120 of the messaging server system 108, according to certain examples. While the content of the database 120 is shown to comprise a number of tables, it will be appreciated that the data could be stored in other types of data structures (e.g., as an object-oriented database).

The database 120 includes message data stored within a message table 314. The entity table 302 stores entity data, including an entity graph 304. Entities for which records are maintained within the entity table 302 may include individuals, corporate entities, organizations, objects, places, events, and so forth. Regardless of type, any entity regarding which the messaging server system 108 stores data may be a recognized entity. Each entity is provided with a unique identifier, as well as an entity type identifier (not shown).

The entity graph 304 furthermore stores information regarding relationships and associations between entities. Such relationships may be social, professional (e.g., work at a common corporation or organization) interested-based or activity-based, merely for example.

The database 120 also stores augmentation data, such as overlays or filters, in an augmentation table 312. The augmentation data is associated with and applied to videos (for which data is stored in a video table 310) and images (for which data is stored in an image table 308).

Filters, in one example, are overlays that are displayed as overlaid on an image or video during presentation to a recipient user. Filters may be of various types, including user-selected filters from a set of filters presented to a sending user by the messaging client application 104 when the sending user is composing a message. Other types of filters include geolocation filters (also known as geo-filters), which may be presented to a sending user based on geographic location. For example, geolocation filters specific to a neighborhood or special location may be presented within a user interface by the messaging client application 104, based on geolocation information determined by a Global Positioning System (GPS) unit of the client device 102.

Another type of filter is a data filter, which may be selectively presented to a sending user by the messaging client application 104, based on other inputs or information gathered by the client device 102 during the message creation process. Examples of data filters include current temperature at a specific location, a current speed at which a sending user is traveling, battery life for a client device 102, or the current time.

Other augmentation data that may be stored within the image table 308 includes augmented reality content items (e.g., corresponding to applying Lenses or augmented reality experiences). An augmented reality content item may be a real-time special effect and sound that may be added to an image or a video.

As described above, augmentation data includes augmented reality content items, overlays, image transformations, AR images, and similar terms refer to modifications that may be applied to image data (e.g., videos or images). This includes real-time modifications, which modify an image as it is captured using device sensors (e.g., one or multiple cameras) of a client device 102 and then displayed on a screen of the client device 102 with the modifications. This also includes modifications to stored content, such as video clips in a gallery that may be modified.

As mentioned above, the video table 310 stores video data that, in one example, is associated with messages for which records are maintained within the message table 314. Similarly, the image table 308 stores image data associated with messages for which message data is stored in the entity table 302. The entity table 302 may associate various augmentations from the augmentation table 312 with various images and videos stored in the image table 308 and the video table 310.

A story table 306 stores data regarding collections of messages and associated image, video, or audio data, which are compiled into a collection (e.g., a story or a gallery). The creation of a particular collection may be initiated by a particular user (e.g., each user for which a record is maintained in the entity table 302). A user may create a "personal story" in the form of a collection of content that has been created and sent/broadcast by that user. To this end, the user interface of the messaging client application 104 may include an icon that is user-selectable to enable a sending user to add specific content to his or her personal story.

A collection may also constitute a "live story," which is a collection of content from multiple users that is created manually, automatically, or using a combination of manual and automatic techniques. For example, a "live story" may constitute a curated stream of user-submitted content from varies locations and events. Users whose client devices have location services enabled and are at a common location event at a particular time may, for example, be presented with an option, via a user interface of the messaging client application 104, to contribute content to a particular live story. The live story may be identified to the user by the messaging client application 104, based on his or her location. The end result is a "live story" told from a community perspective.

A further type of content collection is known as a "location story," which enables a user whose client device 102 is located within a specific geographic location (e.g., on a college or university campus) to contribute to a particular collection. In some examples, a contribution to a location story may require a second degree of authentication to verify that the end user belongs to a specific organization or other entity (e.g., is a student on the university campus).

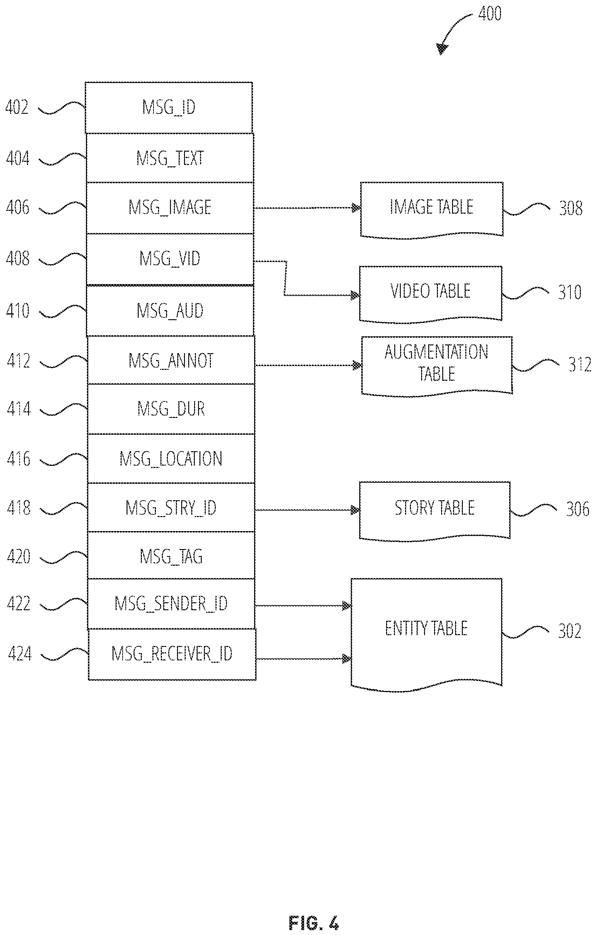

FIG. 4 is a schematic diagram illustrating a structure of a message 400, according to some examples, generated by a messaging client application 104 for communication to a further messaging client application 104 or the messaging server application 114. The content of a particular message 400 is used to populate the message table 314 stored within the database 120, accessible by the messaging server application 114. Similarly, the content of a message 400 is stored in memory as "in-transit" or "in-flight" data of the client device 102 or the application server 112. The message 400 is shown to include the following components:

A message identifier 402: a unique identifier that identifies the message 400.

A message text payload 404: text, to be generated by a user via a user interface of the Client device 102, and that is included in the message 400.

A message image payload 406: image data, captured by a camera component of a client device 102 or retrieved from a memory component of a client device 102, and that is included in the message 400.

A message video payload 408. video data, captured by a camera component or retrieved from a memory component of the client device 102, and that is included in the message 400.

A message audio payload 410: audio data, captured by a microphone or retrieved from a memory component of the client device 102, and that is included in the message 400.

A message augmentation 412: augmentation data (e.g., filters, stickers or other enhancements) that represents augmentations to be applied to message image payload 406, message video payload 408, or message audio payload 410 of the message 400.

A message duration parameter 414: parameter value indicating, in seconds, the amount of time for which content of the message (e.g., the message image payload 406, message video payload 408, message audio payload 410) is to be presented or made accessible to a user via the messaging client application 104.

A message geolocation parameter 416: geolocation data (e.g., latitudinal and longitudinal coordinates) associated with the content payload of the message. Multiple message geolocation parameter 416 values may be included in the payload, each of these parameter values being associated with respect to content items included in the content (e.g., a specific image into within the message image payload 406, or a specific video in the message video payload 408).

A message story identifier 418: identifier values identifying one or more content collections (e.g., "stories") with which a particular content item in the message image payload 406 of the message 400 is associated. For example, multiple images within the message image payload 406 may each be associated with multiple content collections using identifier values.

A message tag 420: each message 400 may be tagged with multiple tags, each of which is indicative of the subject matter of content included in the message payload. For example, where a particular image included in the message image payload 406 depicts an animal (e.g., a lion), a tag value may be included within the message tag 420 that is indicative of the relevant animal. Tag values may be generated manually, based on user input, or may be automatically generated using, for example, image recognition.

A message sender identifier 422: an identifier (e.g., a messaging system identifier, email address, or device identifier) indicative of a user of the Client device 102 on which the message 400 was generated and from which the message 400 was sent.

A message receiver identifier 424: an identifier (e.g., a messaging system identifier, email address, or device identifier) indicative of a user of the client device 102 to which the message 400 is addressed.

The contents (e.g., values) of the various components of message 400 may be pointers to locations in tables within which content data values are stored. For example, an image value in the message image payload 406 may be a pointer to (or address of) a location within an image table 308. Similarly, values within the message video payload 408 may point to data stored within a video table 310, values stored within the message augmentations 412 may point to data stored in an augmentation table 312, values stored within the message story identifier 418 may point to data stored in a story table 306, and values stored within the message sender identifier 422 and the message receiver identifier 424 may point to user records stored within an entity table 302.

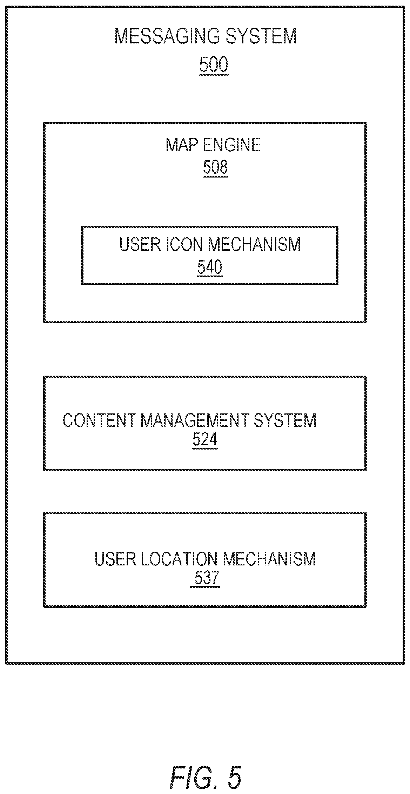

FIG. 5 shows an example embodiment of a social media messaging system 500 configured to provide a map-based graphical user interface for a social media application, such as the the map-based GUI 612 described below. The social media messaging system 500 is in this example provided by messaging system 100, with the respective described components of system 500 in different embodiments being provided by messaging client application 104, application server 112, or a combination thereof. The system 500 and its associated components can thus in some embodiments be provided server-side, for example by the messaging server system 108 (FIG. 1). In such instances, the respective components of the system 500 can be provided by execution of the messaging server application 114 on the application server 112. In other embodiments, one or more components of the system 500 are provided client-side, for example by execution of the messaging client application 104 on a respective client device 102 (FIG. 1). In yet further embodiments, the system 500 is provided collaboratively server-side and client-side, the application server 112 and a client device 102 in communication therewith being configured to provide the respective system components by execution of the messaging client application 104 on the client device 102 and by execution of the messaging server application 114 on the application server 112.

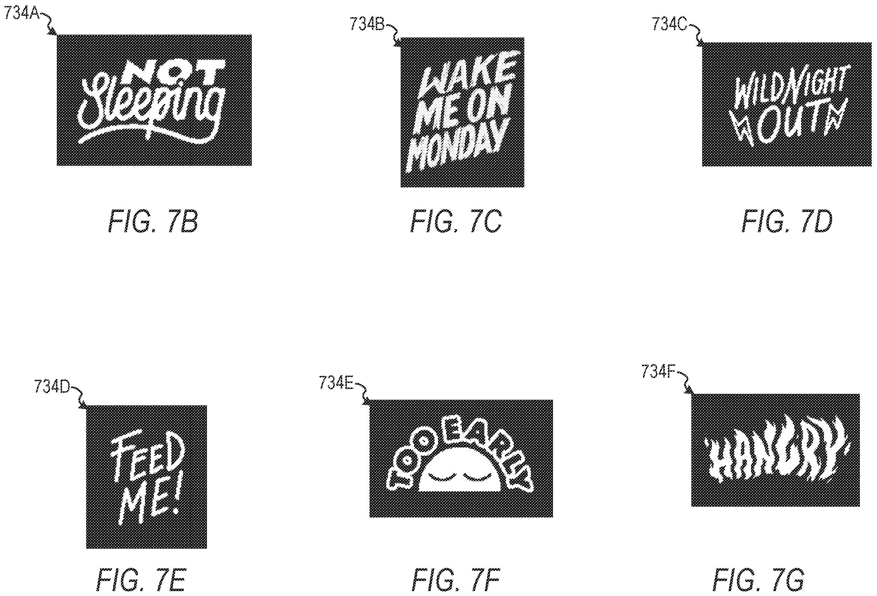

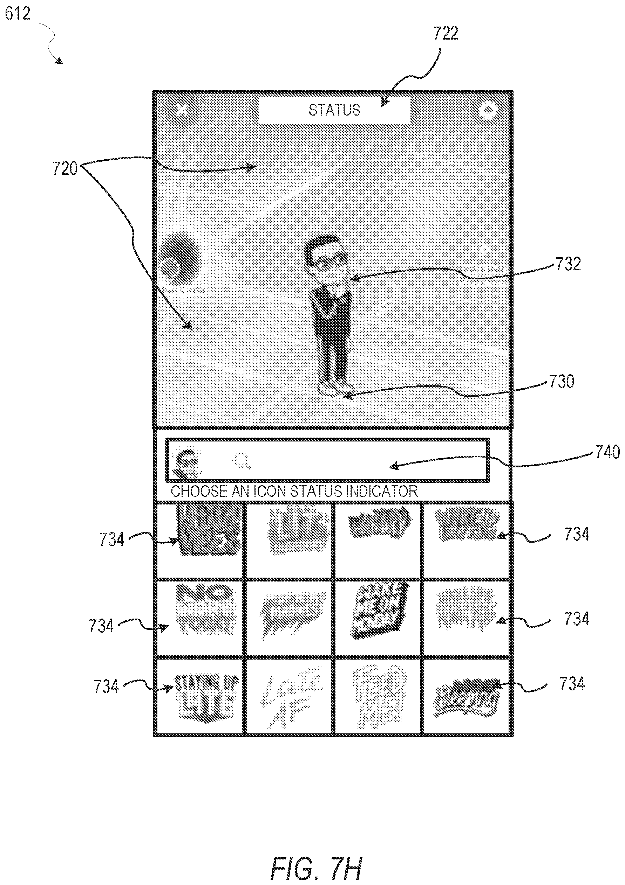

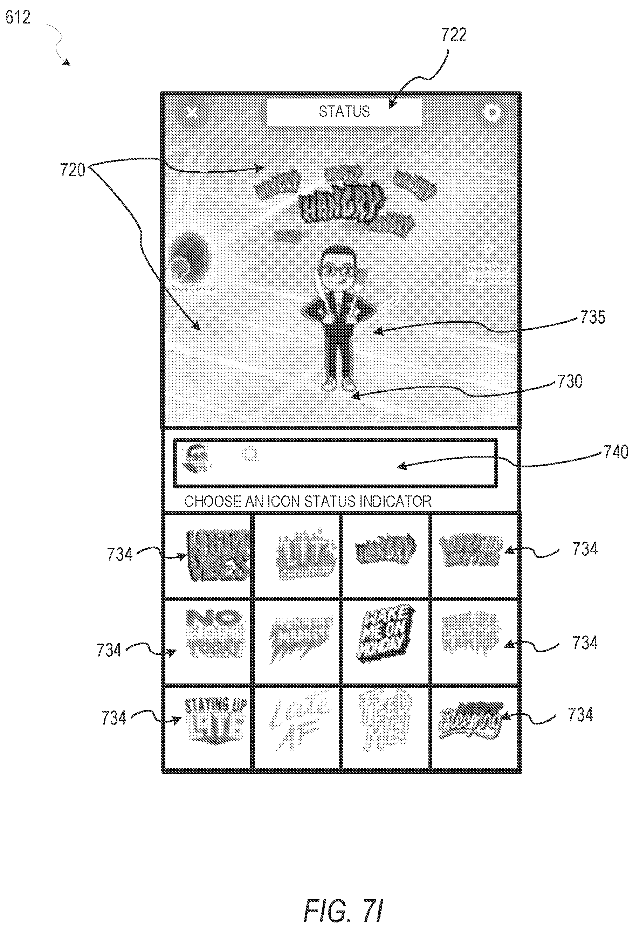

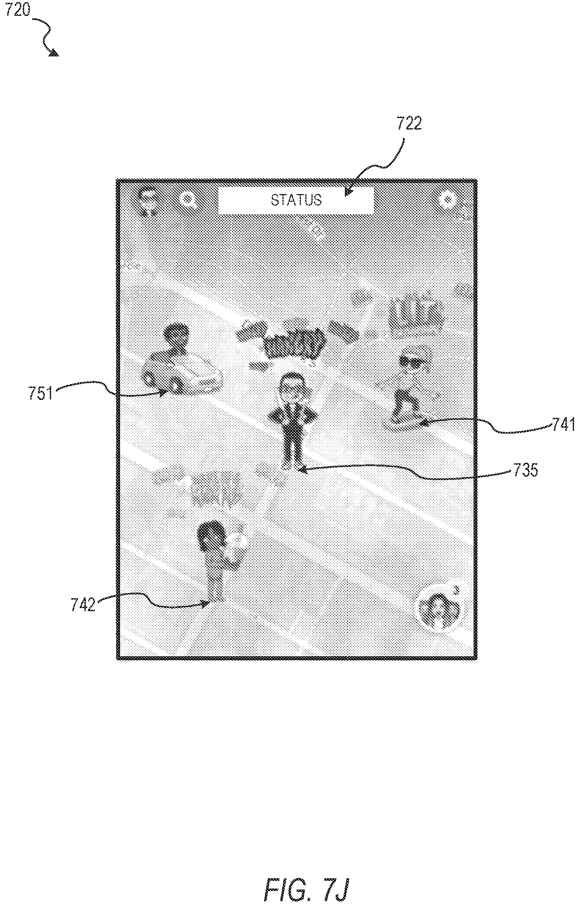

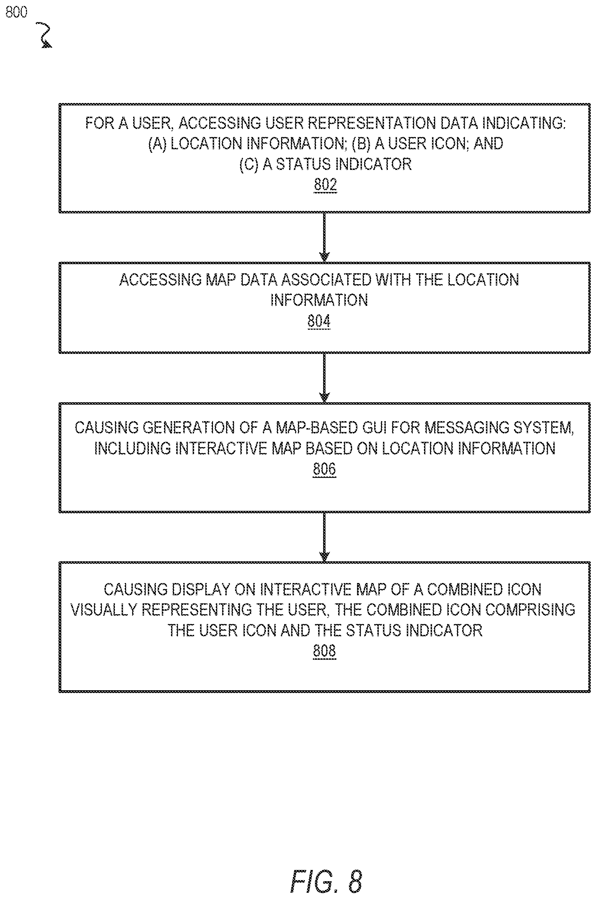

The system 500 includes a map engine 508 to generate a map-based GUI, including the location-based social media information displayed in the map-based GUI. Thus, the map engine 508 is configured to receive map data, and based thereon to facilitate generation of the map 618 in the map viewport 621(e.g. an area of a display for map presentation) of the client device 102. To this end, the map engine 508 can be configured with a user icon mechanism 540 to surface and cause display of particular icons and to generate, identify, and cause display of user icons (e.g., combined expressive icons as described with reference to FIGS. 7 and 8.)

As part of the operation of map engine 508, the icons used to identify positions of devices associated with friend accounts can be generated and provided to a device for inclusion in a map-based GUI. Such a system can be used to provide complex information about a user status by combining an expressive icon (e.g. a flattened two dimensional representation or avatar of a user that can include a representation of a user's face and a distinct or expressive facial expression, and/or that can show the avatar as performing a particular physical action) with a status indicator (e.g., expressing availability for contact, a do not disturb indication, an activity indication, notification of a future activity, or other complex status information). With distinct facial expression is meant a facial expression configured to signal a particular associated emotion or mental state. For example, two different expressive icons (e.g. one expressing sadness and another expressing excitement) combined with the same status indication can convey more complex or layered information about a user than is achievable by the use of only a user icon. The use of an expressive icon with a status indicator via user icon mechanism 540 thus enables complex information to be communicated in an efficient manner within a map-based GUI. This information can be conveyed for multiple different users within the same compact screen space.

The map engine 508 can, based on user privacy and location sharing selections, place friend icons on a map based on the location information. Such icons can provide complex details about users within a map interface, as well as enabling customized actions based on the particular combination of expressive icon and status indicator for each user. Additional details on such actions are described below, and can include access to the time associated with the location data (e.g. how many minutes it has been since the location data was collected), the icon display, details about group interactions with the friend account, links to other interfaces (e.g. chat, content collection, shared gallery photos, etc.) relevant to the friend account associated with the friend icon, or other such actions.

The system 500 also includes a content management system (CMS) 524. In this example embodiment, the CMS 524 provides an administration interface enabling operators to manage content, for example by defining various attributes of different place and/or event stories. The CMS 524 in this example embodiment can include the collection management system 204 of FIG. 2 as previously described. The CMS 524 is configured for the automated or semiautomated compilation of the respective social media galleries or content collections (e.g. stories) as previously described. This can include interface or inclusion of curation or moderation tools along with the server-side curation interface 208. The CMS 524 in this example embodiment further enables an administrator to define a set of expressive icons and a set of status indicators selectable by the user to form a customized combined expressive icon.

The system 500 further includes a user location mechanism 537 configured to determine respective user locations, in this example embodiment indicated by the respective device locations, to determine for each user the particular friend users who are viewable via the map-based GUI, and to provide for display of associated user icons at corresponding display locations. The user location mechanism 537 in some embodiments comprises, as part of the server system 108, a user location datastore and an per-user access control list (ACL) that lists the particular friend users viewable by each user. In some embodiments, the per-user ACL specifies respective viewing level granularity for each viewable user. The user location mechanism 537 in such example embodiments is additionally configured to determine and manage respective user display granularity. This includes calculating non-precise display locations for some users, and causing display of a corresponding user icons at the non-precise display locations.

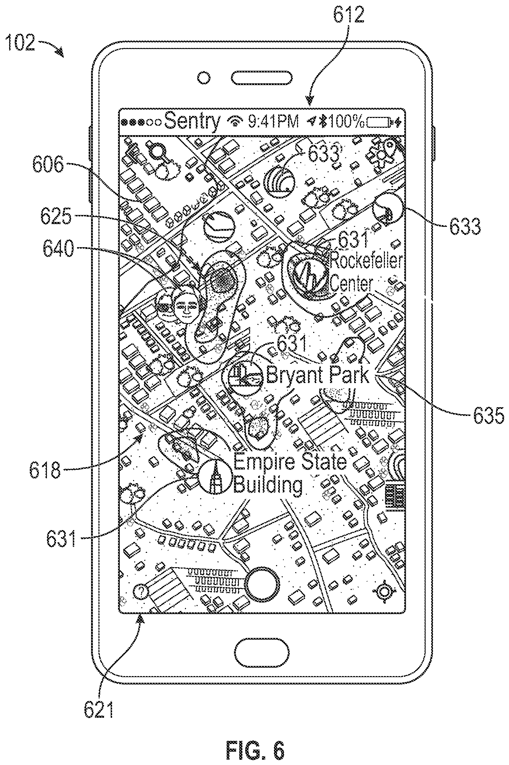

FIG. 6 shows an example embodiment of a map-based graphical user interface, further referred to as a map-based GUI 612, displayed on a client device 102 in the example form of a mobile phone. In this example embodiment, the map-based GUI 612 is generated on a display in the form of a touchscreen 606 capable of receiving haptic input. The map-based GUI 612 includes an interactive map 618 showing a stylized aerial or satellite representation of a particular geographical area. The map 618 is displayed within a map viewport 621 which, in this example embodiment, uses the full available area of the touchscreen 606. In other example embodiments, the map viewport 621 may be a bounded panel or window within a larger display screen. The map-based GUI 612 further comprises a plurality of user-selectable graphical user interface elements displayed at specific respective geographic locations on the map 618. Each such geo-anchored GUI element is in this example embodiment represented by a respective indicium or icon overlaid on the map 618. The map-based GUI 612 may further include one or more informational overlays rendered over the underlying geographical map 618, in this example embodiment including a heatmap 625 representative of the geographical distribution of underlying social media activity on the social media platform provided by the relevant social media application.

As mentioned, the map-based GUI 612 includes a number of different user-selectable icons or UI elements that indicate different geographically based content or information. In this example embodiment, the map-based GUI 612 includes a plurality of different gallery icons, also referred to in this description as "story icons." Each story icon corresponds in location on the map 618 to a respective location-based social media gallery or collection. In the example embodiment of FIG. 6, the map-based GUI 612 includes place icons 631 for place galleries/stories (with associated place labels 635), and spike icons 633 for spike galleries/stories that are dynamically surfaced on the map-based GUI 612 based on one or more metrics of underlying social media activity relating to the submission of social media content to the social media platform with geo-tag data indicating the respectively associated geographical areas.

The map-based GUI includes a graphical representation of associated locations of the user associated with the client device 102 as well as other users (e.g. friend devices or devices for associated accounts visible through location data of a social media platform), each user being represented by a respective user icon 640 or friend icon 640 (for users who are members of an in-application social graph associated with the viewing user). The user icons 640 that are displayed on the map-based GUI 612 based on the current or last known geographic location of respective friends of the user associated with the client device 102. Note that FIG. 6 serves to describe the broad functioning of a map-based GUI for a messaging system consistent with this disclosure, but that the user icons 640 of FIG. 6 are simple facial avatars that do not include a status indicator consistent with combined user icons as disclosed herein. In the example of FIG. 6, the user is not provided with the option of selecting a custom expressive avatar from a plurality of different expressive avatar options, as is the case with expressive user icons according to this disclosure and exemplified in the user interfaces of FIGS. 7A-9 below. The user icons 640 are likewise not combined user icons as disclosed herein and as exemplified in the user interfaces of FIGS. 7A-9.

A user of the social media platform will not be sharing their location if they have never interacted with the map-based GUI 612. The first time the user interacts with the map-based GUI 612, the user is taken through an on-boarding flow which allows for the setting of individual location sharing preferences. A user can also select different groups of other users via a location sharing preferences interface as friend accounts for location sharing. In some embodiments the user can specify different display attributes for the different respective groups or for different respective individuals, as well as selecting an icon to represent the user in maps of friend accounts. If all friend accounts are selected for location sharing, all new people added to the user's friends list will automatically be able to see their location, consistent with the granularity level selected by the user in system settings. When viewing the map-based GUI, the user will thus be able to see the locations of all his/her friends that have shared their location with him/her on the map 618. As discussed, each user is in this example embodiment represented by a respective user icon 640.

The user can access via the map-based GUI 612 content posted from anywhere in the world. This can be achieved by navigating to different geographical areas displayed within the map viewport 621. In particular, the displayed geographical area can be changed by zooming in or zooming out, and by moving the focus area of the map viewport 621. The map-based GUI 612 is provided on a touchscreen 606, in which zooming in and zooming out can be achieved by haptic gestures in the form of a pinch-out or a pinch-in haptic input. Movement of the map 618 within the map viewport 621, so as to change the displayed geographical area, is achieved by a haptic dragging gesture at any point on the map 618.

It will be appreciated that the map-based GUI 612 is dynamic, in that the information displayed therein changes dynamically with time. New information can be triggered or periodically provided to a system and distributed to client applications 104. The underlying social media items upon which surfacing of the icons 631, 633, 640 and generation of the heatmap 625 is based can further continually change due to the expiration of the availability data associated with the icons.

FIGS. 7A-7J are views of a map-based GUI 612 analogous to that described with reference to FIG. 6, but additionally providing functionalities to generate and display combined expressive icons to represent respective user locations on the interactive map 720 provided by the map-based GUI 612. In some embodiments, a viewport with in which the map 720 is displayed can be an entire area of a display device of a client device 102. In other embodiments, the viewport is an area of a display designated for map presentation, with other areas designated for other purposes.

FIG. 7A illustrates aspects of an icon selection interface provided by the map-based GUI 612 for selecting an expressive icon to form part of a combined expressive icon representing the user on the map 720. The icon selection interface includes a portion of the map 720, status information 722, search input mechanism 740 for query-based filtering of expressive icon options (and in a status selection interface such as in FIG. 7H, query-based filtering of status indicator options), and additional map-based GUI information as discussed with respect to FIG. 6. The icon selection interface is in this example embodiment provided by social media messaging system 500 (FIG. 5), which include a map engine 508 with a user icon mechanism 540 to allow a user to select icon information to be displayed as part of the map-based GUI 612 provided by the system 500.

The icon selection interface displays a plurality of different expressive icons 732 from which the user can select a particular expressive icon 732 to represent the user in the GUI 612. The expressive icons 732 are in this example embodiment provided by an anthropomorphic avatar customized by the user to correspond in appearance to the user. The different expressive icons 732, however, have different respective facial expressions, physical poses, physical actions, or combinations thereof. Thus, each of the different expressive icons 732 provides different respective visual information about the first user, such as an activity, emotional state, or aspects of the user's current status, context, or activity. In the icon selection interface displayed in a viewport of a first user's device, the first user can select an expressive icon 732, which is then shown at location 730 within map 720. This icon is relayed to the devices of other users, so that the expressive icon 732 selected by the first user is displayed in the map-based GUIs of other devices authorized to see the location of the first user.

In addition to an expressive icon 732, the current example embodiment provides for the generation and display of a combined expressive icon that merges an expressive icon 732 with a visual display of status information in the form of a status indicator 734 (e.g. a sticker or animation illustrating status information) in order to communicate more complex information via a map interface than by the expressive icon 732 alone. FIGS. 7B-7F illustrate examples of status indicators 734 that can be combined with an expressive icon 732 (e.g. icon information) to generate a combined expressive icon 735 (see FIG. 7I) for use within the map-based GUI 612. In this example embodiment, each status indicator 734 provides a status indication by way of stylized text.

The status indicators 734 in this example embodiment both directly conveys information (e.g., by means of respective text) and is also associated with particular respective UI actions when a combined expressive icon 735 generated from the status indicator is presented within a map based GUI. For example, status indicator 734A is associated with a chat action, such that an icon 732 combined with status indicator 734A generates a combined icon 735 that, when selected as part of a map based interface, automatically opens a communication interface (e.g., a chat interface) for interacting with the user associated with the combined icon 735. The status indicator 734 thus provides a user-selectable user interface element to launch a specific associated action or interface.

In other example status indicators which the user can select in the forming of a combined expressive icon 735 (e.g. in a status selection interface as illustrated in FIGS. 7H and 7I), status indicator 734B and 734E can each be associated with an automatic "do not disturb" message, indicating that the user associated with a resulting combined icon 735 is not currently responding to messages, but is expected to begin responding at a selected date or time. Similarly, status indicators 734C, 734D, and 734F are associated with activities at a particular location. A combined icon 735 including such status indicators can be selected to directly initiate actions in map-based GUI 612, such as providing directions to a location currently associated with the user, or to an expected location at a particular time. Status indicator 734C can, for example, automatically link to an electronic invitation to an event indicating a start and end time, as well as directions to the event.

FIG. 7H illustrates a status selection interface provided by the map-based GUI 612 for selecting status indicator 734 to be merged with a selected expressive icon 732 for a user to generate a combined expressive icon 735. In this example embodiment, the map-based GUI provides an automated combined icon selection flow in which selection of the expressive icon 732 in the icon selection interface of FIG. 7A is immediately and automatically followed by presentation of the status selection interface of FIG. 7H.

In this example embodiment, the status selection interface illustrate map 720 with the selected expressive icon 732 at location 730 for the user associated with the client device on which the interface is generated. The status selection interface of FIG. 7H presents a plurality of status indicator options. The area associated with the plurality of candidate status indicators 734 is scrollable via swipe inputs to display additional options for a selectable status indicator to be merged with expressive icon 732. Each status indicator 734 can be a static sticker graphic, or can be an animation. In some embodiments, status indicator 734 for a particular status can be both, with various additional information to be used depending on a displaying device's settings. For example, one displaying device can have status animations associated with status indicator information disabled, while another can have the animations enabled, so that the same combined expressive icon 735 can be presented in a different forms at different client devices depending on the options selected for a particular device.

Similarly, different zoom or information densities in a particular display of map data can present a combined expressive icon 735 in different formats. For example, at one density level, only a face of the relevant avatar can be presented, with the full expressive icon 732 presented as the information density in the map-based GUI decreases (e.g. expressive icon 732), and the full combined expressive icon (e.g. combined expressive icon 735) with the expressive icon and the status sticker or animation displayed when this information does not conflict with other map data information in the map-based GUI 612.

When a particular indicator of status indicator 734 is selected, then as illustrated in FIG. 7I, the combined expressive icon 735 is available for display in map 720. In various embodiments, status information 722 of a device displaying the map 720 can impact both the display and the selection process in various ways. For example, the expressive icons 732 and the status indicators 734 presented for selection within the respective selection interfaces can be sorted or modified based on status information 722. For example, if a user device is identified as located in a restaurant, then status information 722 can reflect this, with the expressive icon 732 options for selection sorted or selected from a superset of expressive icon options to prioritize and present expressive icons relating to dining. Similarly, status indicator options presented for selection can also be sorted or filtered to emphasize or be contextual to this status information 722.

Additionally, as described above, certain status indicators 734 can be associated with different actions. When status information 722 identifies a status as at a restaurant, one status indicator 734 option can be associated with a do not disturb action, while another can be associated with an invitation to join the user at the restaurant before a certain time.

FIG. 7J illustrates an example of the interactive map 720 of GUI 612 that includes user icons from various different users a different client devices. The map 720 includes both background map information as well as status information 722 for the user to whom the map 720 is displayed, as well as respective user icons for friends of the user within the social media platform provided by system 500. For example, combined expressive icon 735 for the user associated with the viewing device is shown at the center of the screen at a location associated with the device for the user. Two other combined expressive friend icons 741 and 742 are also shown at locations associated with devices of respective friend users viewable with the user.

Combined expressive friend icon 741 includes both an expressive icon representing the associated friend, and status indicator information shown as an animation above the expressive icon to generate combined expressive icon 741 at a position within the map 720. Friend icon 751 is an expressive icon without status indicator, i.e. being a non-combined expressive icon.

Selection of any of the friend icons in the map in this example triggers a specific respective GUI action associated with the icon. For example, selection of icon 751 triggers display of (a) information about the associated friend account, (b) a do not disturb message due to the user's driving, and (c) an expected arrival and destination for friend associated with user icon 751, Selection of combined expressive icon 741 automatically launches a chat interface with the associated friend, Selection of combined expressive icon 742 indicates that the relevant friend is having coffee at a particular location until a particular time.

If combined expressive icon 735, which provides the visual representation for the user account associated the device displaying the interactive map 720, is selected, options to update the icon or status indicator information are automatically surfaced. In this example embodiment, such selection of the combined expressive icons 735 launches the above-described combined icon selection flow. When user representation data for the user is thus updated, operations to update the user representation data indicating the combined expressive icon 735 locally at the user's device occur, and the updated information is also communicated to server computers of a server system. The server system can then distribute this information to accounts within the social graph of the initial user that are authorized to have the location and combined icon for the initial user.

In some embodiments, collisions can occur between images and icons associated with different friend accounts displayed in a map-based GUI. Various embodiments can address such collisions, where images overlap, in different ways. In one embodiment, the images can be allowed to overlap. Priority (e.g. top) placement can be determined by a proximity to a viewport center, a friend account ranking based on recent communications or frequency of communications with the friend accounts whose images are colliding in the map-based GUI, or other such prioritization mechanisms. In embodiments where significant amounts of information are presented as the additional auto-pop information, such information can be abbreviated or truncated in the case of a collision. In some embodiments, icons and images can be aggregated or clustered to form a joint image or joint icon.

FIG. 8 describes a method 800 of using a combined expressive icon in accordance with embodiments described herein. In some embodiments, the method 800 is performed by a computing device with one or more processors, in this example embodiment being performed by the messaging system 500 (FIG. 5). In some embodiments, the method 800 is embodied in computer-readable instructions stored in a non-transitory storage device, such that when the instructions are executed by one or more processors of a device, the device performs the method 800. Other embodiments may be implemented using any acceptable format or instantiation.

Method 800 begins with operation 802 accessing, using one or more processors of a computing device, user representation data for a user on whose client device a map-based GUI is to be generated. The user representation data in this example indicates: (a) location information indicating a geographical location of a specific client device associated with the user; (b) a user icon configured to provide a visual representation of the user (e.g., a user-selected expressive icon such as avatar-based icon 732 in FIG. 7 H); and (c) a status indicator configured to provide a visual indication of a current status associated with the user (e.g., status indicator 734F of FIG. 7G). The location information can be generated automatically by location circuitry (e.g. global positioning system circuitry or other location systems) of a client device. The icon information and status indicator information can be selected by a user using a map-based GUI as described above. Then operation 804 involves accessing, by the one or more computer processor devices of the system 500, map data associated with the geographic location indicated by the location information. The map data can be accessed based on the indicated location and used to generate map graphics for display in the map-based GUI with icon information.

The method then, at operation 806, causes generation on a first client device (in this example the client device associated with the user account to whom the map-based GUI is to be displayed) of a map-based GUI (e.g., GUI 612 described with reference to FIGS. 7A-7J) for a social media platform, the map-based GUI comprising an interactive map that displays the indicated geographic location. At operation 808, the system causes display on the interactive map of a combined icon visually representing the user at a display location based on the indicated geographic location, the combined icon comprising the user icon and the status indicator (e.g., combined expressive icon 735 indicating user location in interactive map 720, FIG. 7J), thereby visually representing on the interactive map the current status

Some embodiments operate where selection of the combined expressive icon causes presentation on the display of first respective context information for the account associated with the combined expressive icon associated with the account. Some embodiments operate where selection of the combined expressive icon initiates an action associated with the status indicator used to generate the combined expressive icon. In some such embodiments, the action is selected from a group comprising a map direction action, a chat interface display action, a messaging interface action, and a do not disturb response action. In other embodiments, the status indicator and the action are automatically selected by the one or more processors, based on a device status.

Some embodiments involve receiving, at the first client device, a user input on a touchscreen selecting the icon information as a two dimensional representation of a user associated with the account and the first client device, where the computing device is the first client device. This embodiment thus involves selection of an expressive icon and status indicator information by a user of a device, and display of a combined expressive icon at that device. Other embodiments can involve communication of this information to other devices (e.g. via a server computer of a messaging system). Some such embodiments further operate by receiving, at the first client device, a second user input on the touchscreen selecting the status indicator information from a plurality of status indicators as part of a status selection interface. Other embodiments operate by receiving, at a server computer from a second client device, the location information, the icon information, and the status indicator information and communicating, from the server computer to the first client device, the combined expressive icon with instructions to cause display on the first client device of the combined expressive icon in the map interface;

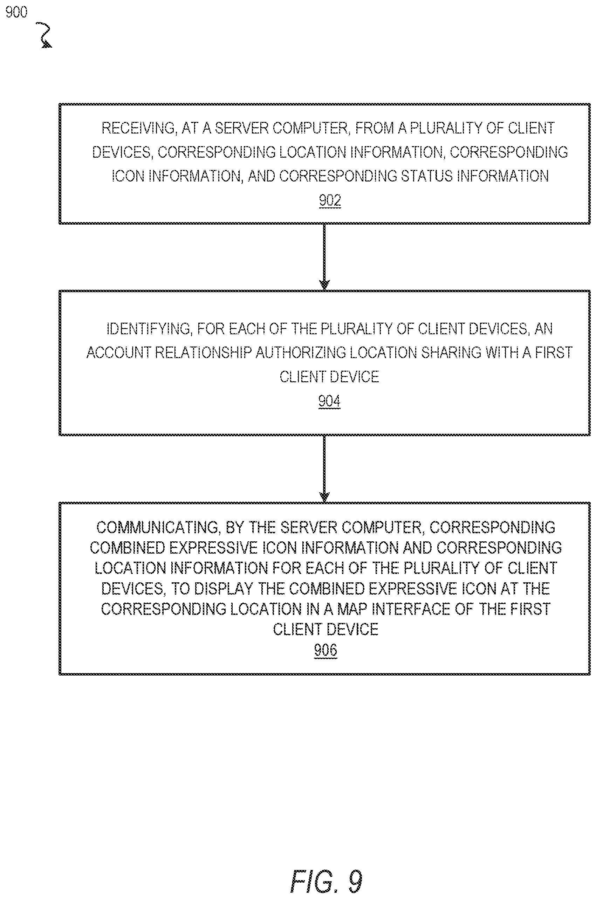

FIG. 9 describes a method 900 of using a combined expressive icon in accordance with embodiments described herein. In some embodiments, the method 900 is performed by a computing device with one or more processors. In some embodiments, the method 900 is embodied in computer-readable instructions stored in a non-transitory storage device, such that when the instructions are executed by one or more processors of a device, the device performs the method 900. Other embodiments may be implemented using any acceptable format or instantiation.

Method 900 begins with operation 902 receiving, at a server computer, from each client device of a plurality of client devices, corresponding location information, corresponding icon information, and corresponding status indicator information. Operation 904 then involves identifying, by the one or more processors of the server computer, an account relationship authorizing location sharing with the first client device by said each client device of the plurality of client devices. Operation 900 involves communicating, by the server computer, corresponding combined expressive icon information and the corresponding location information for said each client device of the plurality of client devices with instructions to display the combined expressive icon information at the corresponding location information in the map interface of the first client device.

Some embodiments operate where the corresponding combined expressive icon information for said each client device identifies a corresponding different action associated with an icon in the map interface of the first client device for said each client device. Other embodiments operate where a first action for a third client device of the plurality of client devices comprises an automatic do not disturb response action, wherein a second action for a fourth client device of the plurality of client devices comprises an automatic invitation action with associated map directions for the map interface. In further embodiments, other types of actions can be directly initiated from a map-based GUI in accordance with various details described above.

Additionally, while the operations of method 800 and 900 are described in a particular order above, it will be apparent that the methods can be performed together as part of a system, and that the operations can be repeated or can involve intervening operations in various different implementations.

Additionally, some embodiments involve a client device with a display screen, the client device being configured to display on the screen a map based GUI comprising map data one or more icons associated with corresponding accounts of a messaging system. Each icon is displayed with the map data in a location associated with a device for an account associated with a corresponding icon. Additionally, at least a first icon of the one or icons comprises a combined expressive icon generated from an expressive icon (e.g. an representation of a person in a particular configuration reflecting a user of an account associated with the icon) and status indicator information (e.g. text, image, or animation information describing a status). In some embodiments, the combined expressive icon is selectable to directly launch an action on the client device that is associated with the status indicator information used to generate the combined expressive icon.

The description herein includes systems, methods, devices, techniques, instruction sequences, and computing machine program products that embody illustrative embodiments of the disclosure. In the provided description, for the purposes of explanation, numerous specific details are set forth in order to provide an understanding of various embodiments of the inventive subject matter. It will be evident, however, to those skilled in the art, that embodiments of the disclosed subject matter may be practiced without these specific details. In general, well-known instruction instances, protocols, structures, and techniques are not necessarily shown in detail.

These systems, system components, methods, applications, and so forth described in conjunction with the above embodiments can be implemented in the context of a machine and an associated software architecture. The sections below describe representative software architecture(s) and machine (e.g., hardware) architecture(s) that are suitable for use with the disclosed embodiments.

Software architectures are used in conjunction with hardware architectures to create devices and machines configured for particular purposes. For example, a particular hardware architecture coupled with a particular software architecture will create a mobile device, such as a mobile phone, tablet device, or so forth. A slightly different hardware and software architecture may yield a smart device for use in the "internet of things," while yet another combination produces a server computer for use within a cloud computing architecture. The software and hardware architectures presented here are example architectures for implementing the disclosure, and are not exhaustive as to possible architectures that can be employed for implementing the disclosure.

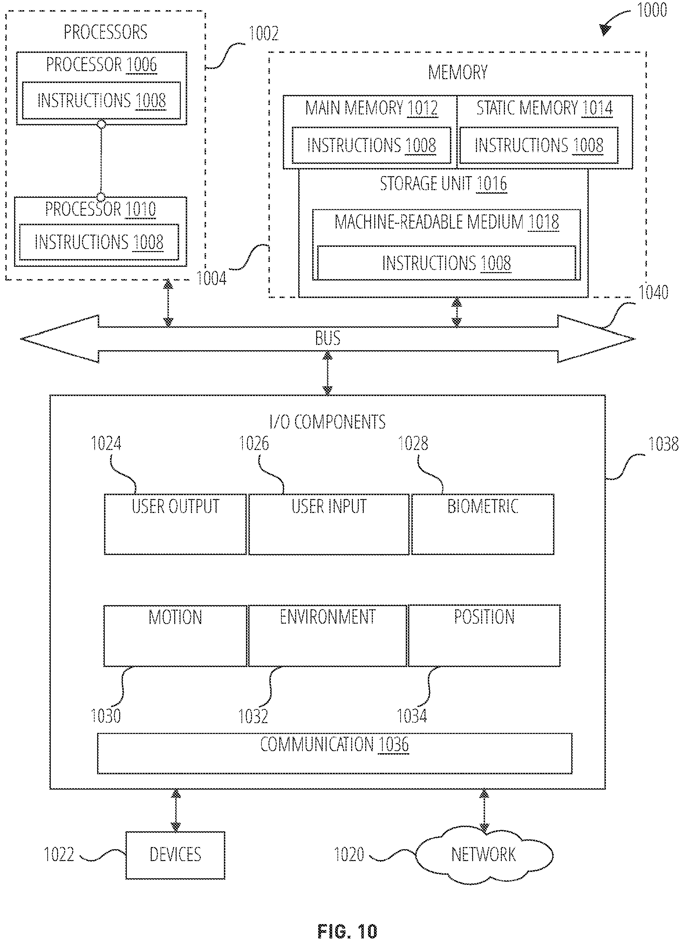

The machine 1000 may include processors 1002, memory 1004, and input/output I/O components 1038, which may be configured to communicate with each other via a bus 1040. In an example, the processors 1002 (e.g., a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), an Application Specific Integrated Circuit (ASIC), a Radio-Frequency Integrated Circuit (RFIC), another processor, or any suitable combination thereof) may include, for example, a Processor 1006 and a processor 1010 that execute the instructions 1008. The term "processor"is intended to include multi-core processors that may comprise two or more independent processors (sometimes referred to as "cores") that may execute instructions contemporaneously. Although FIG. 10 shows multiple processors 1002, the machine 1000 may include a single processor with a single-core, a single processor with multiple cores (e.g., a multi-core processor), multiple processors with a single core, multiple processors with multiples cores, or any combination thereof.

The memory 1004 includes a main memory 1012, a static memory 1014, and a storage unit 1016, both accessible to the processors 1002 via the bus 1040. The main memory 1012, the static memory 1014, and storage unit 1016 store the instructions 1008 embodying any one or more of the methodologies or functions described herein. The instructions 1008 may also reside, completely or partially, within the main memory 1012, within the static memory 1014, within machine-readable medium 1018 within the storage unit 1016, within at least one of the processors 1002 (e.g., within the Processor's cache memory), or any suitable combination thereof. during execution thereof by the machine 1000.

The JJO components 1038 may include a wide variety of components to receive input, provide output, produce output, transmit information, exchange information, capture measurements, and so on. The specific I/O components 1038 that are included in a particular machine will depend on the type of machine. For example, portable machines such as mobile phones may include a touch input device or other such input mechanisms, while a headless server machine will likely not include such a touch input device. It will be appreciated that the I/O components 1038 may include many other components that are not shown in FIG. 10. In various examples, the I/O components 1038 may include user output components 1024 and user input components 1026. The user output components 1024 may include visual components (e.g., a display such as a plasma display panel (PDP), a light-emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The user input components 1026 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and force of touches or touch gestures, or other tactile input components), audio input components (e.g., a microphone), and the like.

In further examples, the I/O components 1038 may include biometric components 1028, motion components 1030, environmental components 1032, or position components 1034, among a wide array of other components. For example, the biometric components 1028 include components to detect expressions (e.g., hand expressions, facial expressions, vocal expressions, body gestures, or eye-tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The motion components 1 030 include acceleration sensor components (e.g., accelerometer), gravitation sensor components, rotation sensor components (e.g., gyroscope). The environmental components 1032 include, for example, one or cameras (with still image/photograph and video capabilities), illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detection concentrations of hazardous gases for safety or to measure pollutants in the atmosphere), or other components that may provide indications, measurements, or signals corresponding to a surrounding physical environment. The position components 1034 include location sensor components (e.g., a GPS receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 1038 further include communication components 1036 operable to couple the machine 1000 to a network 1020 or devices 1022 via respective coupling or connections. For example, the communication components 1036 may include a network interface Component or another suitable device to interface with the network 1020. In further examples, the communication components 1036 may include wired communication components, wireless communication components, cellular communication components, Near Field Communication (NFC) components, Bluetooth^{®} components (e.g., Bluetooth^{®} Low Energy), Wi-Fi^{®} components, and other communication components to provide communication via other modalities. The devices 1022 may be another machine or any of a wide variety of peripheral devices (e.g., a peripheral device coupled via a USB).

Moreover, the communication components 1036 may detect identifiers or include components operable to detect identifiers. For example, the communication components 1036 may include Radio Frequency Identification (RFID) tag reader components, NFC smart tag detection components, optical reader components (e.g., an optical sensor to detect one-dimensional bar codes such as Universal Product Code (UPC) bar code, multidimensional bar codes such as Quick Response (QR) code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 1036, such as location via Internet Protocol (IP) geolocation, location via Wi-Fi^{®} signal triangulation, location via detecting an NFC beacon signal that may indicate a particular location, and so forth.

The various memories (e.g., main memory 1012, static memory 1014, and memory of the processors 1002) and storage unit 1016 may store one or more sets of instructions and data structures (e.g., software) embodying or used by any one or more of the methodologies or functions described herein. These instructions (e.g., the instructions 1008), when executed by processors 1002, cause various operations to implement the disclosed examples.

The instructions 1008 may be transmitted or received over the network 1020, using a transmission medium, via a network interface device (e.g., a network interface component included in the communication components 1036) and using any one of several well-known transfer protocols (e.g., hypertext transfer protocol (HTTP). Similarly, the instructions 1008 may be transmitted or received using a transmission medium via a coupling (e.g., a peer-to-peer coupling) to the devices 1022.

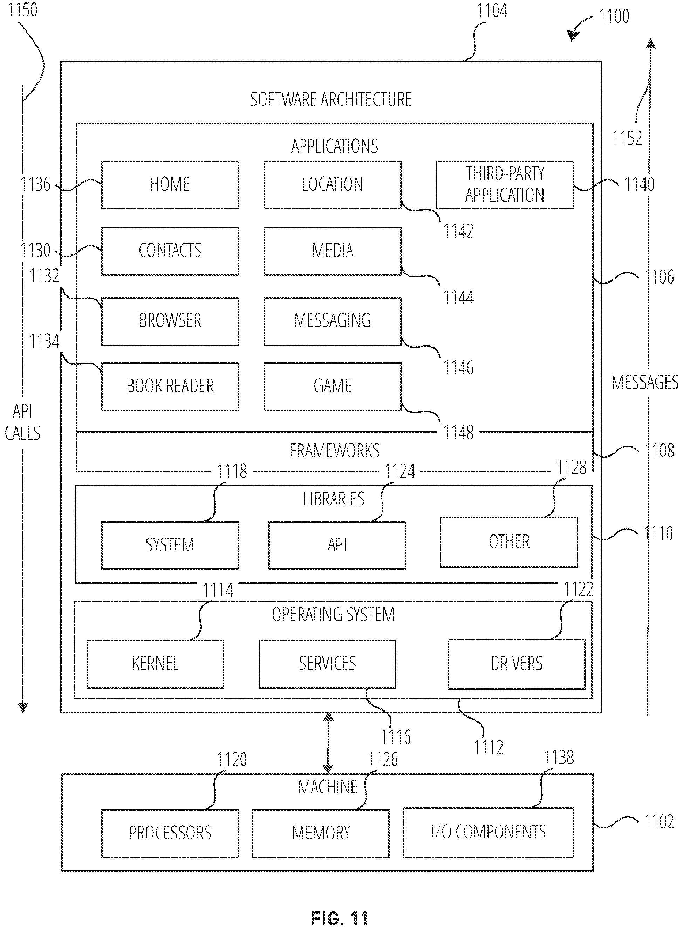

FIG. 11 is a block diagram 1100 illustrating a software architecture 1104, which can be installed on any one or more of the devices described herein. The software architecture 1104 is supported by hardware such as a machine 1102 that includes processors 1120, memory 1126, and I/O components 1138. In this example, the software architecture 1104 can be conceptualized as a stack of layers, where each layer provides a particular functionality. The software architecture 1104 includes layers such as an operating system 1112, libraries 1110, frameworks 1108, and applications 1106. Operationally, the applications 1106 invoke API calls 1150 through the software stack and receive messages 1152 in response to the API calls 1150.

The operating system 1112 manages hardware resources and provides common services. The operating system 1112 includes, for example, a kernel 1114, services 1116, and drivers 1122. The kernel 1114 acts as an abstraction layer between the hardware and the other software layers. For example, the kernel 1114 provides memory management, processor management (e.g., scheduling), component management, networking, and security settings, among other functionality. The services 1116 can provide other common services for the other software layers. The drivers 1122 are responsible for controlling or interfacing with the underlying hardware. For instance, the drivers 1122 can include display drivers, camera drivers, BLUETOOTH^{®} or BLUETOOTH^{®} Low Energy drivers, flash memory drivers, serial communication drivers (e.g., USB drivers), WI-FI^{®} drivers, audio drivers, power management drivers, and so forth.

The libraries 1110 provide a low-level common infrastructure used by the applications 1106. The libraries 1110 can include system libraries 1118 (e.g., C standard library) that provide functions such as memory allocation functions, string manipulation functions, mathematic functions, and the like. In addition, the libraries 1110 can include API libraries 1124 such as media libraries (e.g., libraries to support presentation and manipulation of various media formats such as Moving Picture Experts Group-4 (MPEG4), Advanced Video Coding (H.264 or AVC), Moving Picture Experts Group Layer-3 (MP3), Advanced Audio Coding (AAC), Adaptive Multi-Rate (AMR) audio codec, Joint Photographic Experts Group (JPEG or IPG), or Portable Network Graphics (PNG)), graphics libraries (e.g., an OpenGL framework used to render in two dimensions (2D) and three dimensions (3D) in a graphic content on a display), database libraries (e.g., SQLite to provide various relational database functions), web libraries (e.g., WebKit to provide web browsing functionality), and the like. The libraries 1110 can also include a wide variety of other libraries 1128 to provide many other APIs to the applications 1106.

The frameworks 1108 provide a common high-level infrastructure that is used by the applications 1106. For example, the frameworks 1108 provide various graphical user interface (GUI) functions, high-level resource management, and high-level location services. The frameworks 1108 can provide a broad spectrum of other APIs that can be used by the applications 1106, some of which may be specific to a particular operating system or platform.

In an example, the applications 1106 may include a home application 1136, a contacts application 1130, a browser application 1132, a book reader application 1134, a location application 1142, a media application 1144, a messaging application 1146, a game application 1148, and a broad assortment of other applications such as a third-party application 1140. The applications 1106 are programs that execute functions defined in the programs. Various programming languages can be employed to create one or more of the applications 1106, structured in a variety of manners, such as object-oriented programming languages (e.g., Objective-C, Java, or C++) or procedural programming languages (e.g., C or assembly language). In a specific example, the third-party application 1140 (e.g., an application developed using the ANDROID^{™} or IOS^{™} software development kit (SDK) by an entity other than the vendor of the particular platform) may be mobile software running on a mobile operating system such as IOS^{™}, ANDROID^{™}, WINDOWS^{®} Phone, or another mobile operating system. In this example, the third-party application 1140 can invoke the API calls 1150 provided by the operating system 1112 to facilitate functionality described herein.

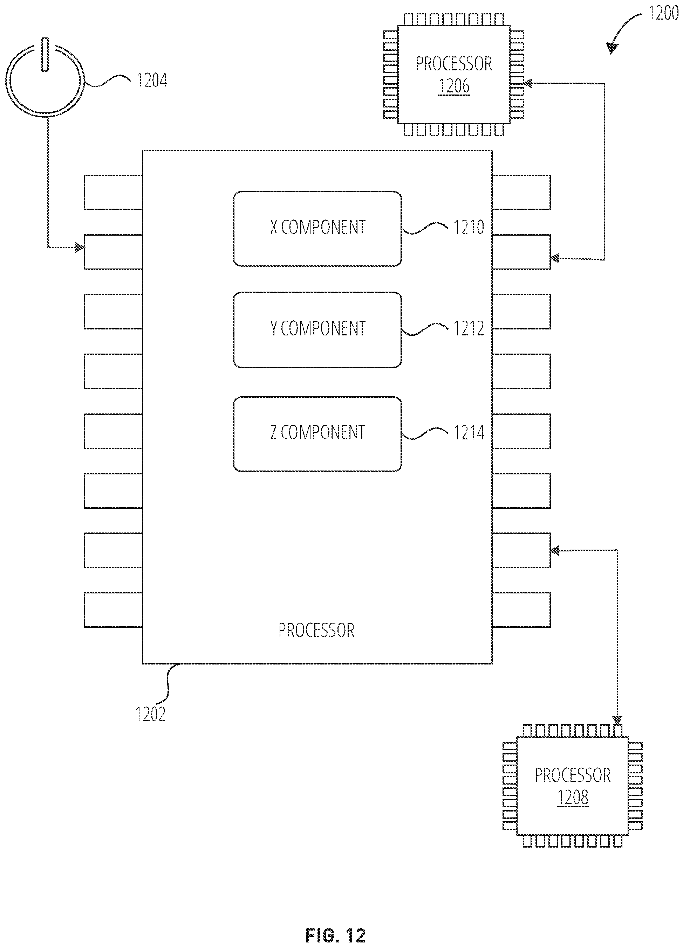

Turning now to FIG. 12, there is shown a diagrammatic representation of a processing environment 1200, which includes a processor 1202, a processor 1206, and a processor 1208 (e.g., a GPU, CPU or combination thereof).

The processor 1202is shown to be coupled to a power source 1204, and to include (either permanently configured or temporarily instantiated) modules, namely an X component 1210, a Y component 1212, and a Z component 1214. The X component 1210 operationally generates the map engine 508 (FIG. 5), the Y component 1212 operationally generates the user icon mechanism 504, and the Z component 1214 operationally generates user location mechanism 537. As illustrated, the processor 1202 is communicatively coupled to both the processor 1206 and the processor 1208.

### GLOSSARY

"Carrier signal" refers to any intangible medium that is capable of storing, encoding, or carrying instructions for execution by the machine, and includes digital or analog communications signals or other intangible media to facilitate communication of such instructions. Instructions may be transmitted or received over a network using a transmission medium via a network interface device.

"Client device" refers to any machine that interfaces to a communications network to obtain resources from one or more server systems or other client devices. A client device may be, but is not limited to, a mobile phone, desktop computer, laptop, portable digital assistants (PDAs), smartphones, tablets, ultrabooks, netbooks, laptops, multi-processor systems, microprocessor-based or programmable consumer electronics, game consoles, set-top boxes, or any other communication device that a user may use to access a network.

"Communication network" refers to one or more portions of a network that may be an ad hoc network, an intranet, an extranet, a virtual private network (VPN), a local area network (LAN), a wireless LAN (WLAN), a wide area network (WAN), a wireless WAN (WWAN), a metropolitan area network (MAN), the Internet, a portion of the Internet, a portion of the Public Switched Telephone Network (PSTN), a plain old telephone service (POTS) network, a cellular telephone network, a wireless network, a Wi-Fi^{®} network, another type of network, or a combination of two or more such networks. For example, a network or a portion of a network may include a wireless or cellular network and the coupling may be a Code Division Multiple Access (CDMA) connection, a Global System for Mobile communications (GSM) connection, or other types of cellular or wireless coupling. In this example, the coupling may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High Speed Packet Access (HSPA), Worldwide Interoperability for Microwave Access (WiMAX), Long Term Evolution (LTE) standard, others defined by various standard-setting organizations, other long-range protocols, or other data transfer technology.

"Component" refers to a device, physical entity, or logic having boundaries defined by function or subroutine calls, branch points, APIs, or other technologies that provide for the partitioning or modularization of particular processing or control functions. Components may be combined via their interfaces with other components to carry out a machine process. A component may be a packaged functional hardware unit designed for use with other components and a part of a program that usually performs a particular function of related functions. Components may constitute either software components (e.g., code embodied on a machine-readable medium) or hardware components. A "hardware component" is a tangible unit capable of performing certain operations and may be configured or arranged in a certain physical manner. In various example embodiments, one or more computer systems (e.g., a standalone computer system, a client computer system, or a server computer system) or one or more hardware components of a computer system (e.g., a processor or a group of processors) may be configured by software (e.g., an application or application portion) as a hardware component that operates to perform certain operations as described herein. A hardware component may also be implemented mechanically, electronically, or any suitable combination thereof. For example, a hardware component may include dedicated circuitry or logic that is permanently configured to perform certain operations. A hardware component may be a special-purpose processor, such as a field-programmable gate array (FPGA) or an application specific integrated circuit (ASIC). A hardware component may also include programmable logic or circuitry that is temporarily configured by software to perform certain operations. For example, a hardware component may include software executed by a general-purpose processor or other programmable processor. Once configured by such software, hardware components become specific machines (or specific components of a machine) uniquely tailored to perform the configured functions and are no longer general-purpose processors. It will be appreciated that the decision to implement a hardware component mechanically, in dedicated and permanently configured circuitry, or in temporarily configured circuitry (e.g., configured by software), may be driven by cost and time considerations. Accordingly, the phrase "hardware component"( or "hardware-implemented component") should be understood to encompass a tangible entity, be that an entity that is physically constructed, permanently configured (e.g., hardwired), or temporarily configured (e.g., programmed) to operate in a certain manner or to perform certain operations described herein. Considering embodiments in which hardware components are temporarily configured (e.g., programmed), each of the hardware components need not be configured or instantiated at any one instance in time. For example, where a hardware component comprises a general-purpose processor configured by software to become a special-purpose processor, the general-purpose processor may be configured as respectively different special-purpose processors (e.g., comprising different hardware components) at different times. Software accordingly configures a particular processor or processors, for example, to constitute a particular hardware component at one instance of time and to constitute a different hardware component at a different instance of time. Hardware components can provide information to, and receive information from, other hardware components. Accordingly, the described hardware components may be regarded as being communicatively coupled. Where multiple hardware components exist contemporaneously, communications may be achieved through signal transmission (e.g., over appropriate circuits and buses) between or among two or more of the hardware components. In embodiments in which multiple hardware components are configured or instantiated at different times, communications between such hardware components may be achieved, for example, through the storage and retrieval of information in memory structures to which the multiple hardware components have access. For example, one hardware component may perform an operation and store the output of that operation in a memory device to which it is communicatively coupled. A further hardware component may then, at a later time, access the memory device to retrieve and process the stored output. Hardware components may also initiate communications with input or output devices, and can operate on a resource (e.g., a collection of information). The various operations of example methods described herein may be performed, at least partially, by one or more processors that are temporarily configured (e.g., by software) or permanently configured to perform the relevant operations. Whether temporarily or permanently configured, such processors may constitute processor-implemented components that operate to perform one or more operations or functions described herein. As used herein, "processor-implemented component" refers to a hardware component implemented using one or more processors. Similarly, the methods described herein may be at least partially processor-implemented, with a particular processor or processors being an example of hardware. For example, at least some of the operations of a method may be performed by one or more processors 1002 or processor-implemented components. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an API). The performance of certain of the operations may be distributed among the processors, not only residing within a single machine, but deployed across a number of machines. In some example embodiments, the processors or processor-implemented components may be located in a single geographic location (e.g., within a home environment, an office environment, or a server farm). In other example embodiments, the processors or processor-implemented components may be distributed across a number of geographic locations.

"Computer-readable storage medium" refers to both machine-storage media and transmission media. Thus, the terms include both storage devices/media and carrier waves/modulated data signals. The terms "machine-readable medium," "computer-readable medium" and "device-readable medium" mean the same thing and may be used interchangeably in this disclosure.

"Ephemeral message" refers to a message that is accessible for a time-limited duration. An ephemeral message may be a text, an image, a video and the like. The access time for the ephemeral message may be set by the message sender. Alternatively, the access time may be a default setting or a setting specified by the recipient. Regardless of the setting technique, the message is transitory.

"Machine storage medium" refers to a single or multiple storage devices and media (e.g., a centralized or distributed database, and associated caches and servers) that store executable instructions, routines and data. The term shall accordingly be taken to include, but not be limited to, solid-state memories, and optical and magnetic media, including memory internal or external to processors. Specific examples of machine-storage media, computer-storage media and device-storage media include non-volatile memory, including by way of example semiconductor memory devices, e.g., erasable programmable read-only memory (EPROM), electrically erasable programmable read-only memory (EEPROM), FPGA, and flash memory devices; magnetic disks such as internal hard disks and removable disks; magneto-optical disks; and CD-ROM and DVD-ROM disks The terms "machine-storage medium," "device-storage medium," "computer-storage medium" mean the same thing and may be used interchangeably in this disclosure. The terms "machine-storage media," "computer-storage media," and "device-storage media" specifically exclude carrier waves, modulated data signals, and other such media, at least some of which are covered under the term "signal medium."

"Non-transitory computer-readable storage medium" refers to a tangible medium that is capable of storing, encoding, or carrying the instructions for execution by a machine.

"Signal medium" refers to any intangible medium that is capable of storing, encoding, or carrying the instructions for execution by a machine and includes digital or analog communications signals or other intangible media to facilitate communication of software or data. The term "signal medium" shall be taken to include any form of a modulated data signal, carrier wave, and so forth. The term "modulated data signal" means a signal that has one or more of its characteristics set or changed in such a matter as to encode information in the signal. The terms "transmission medium" and "signal medium" mean the same thing and may be used interchangeably in this disclosure.

## Claims

1. A method comprising:
accessing (802) user representation data for a user of a social media platform, the user representation data indicating:
location information indicating a geographic location of a specific client device associated with the user;
a user icon configured to provide a visual representation of the user; an d
a status indicator configured to provide a visual indication of a current status associated with the user, the status indicator having an associated direct action triggerable by selection of a combined icon of which it forms part, wherein the status indicator is selected from a plurality of different status indicators having different associated direct actions;
accessing (804) map data associated with the geographic location indicated by the location information;
in an automated operation based at least in part on the map data and performed using one or more computer processor devices configured therefor, causing (806) generation of a map-based graphical user interface, GUI, for the social media platform, the map-based GUI comprising an interactive map that includes the indicated geographic location;
causing (808) display on the interactive map of the combined icon visually representing the user at a display location based on the indicated geographic location, the combined icon comprising the user icon and the status indicator; and
responsive to user selection of the combined icon, automatically initiating the direct action associated with the status indicator.

2. The method of claim 1, wherein the combined icon is a combined expressive icon in which the user icon is an expressive icon comprising an anthropomorphic avatar associated with the user, the avatar visually presenting at least one of:
a distinct facial expression; and
performance of a particular physical action.

3. The method of claim 2, further comprising the prior operations of:
causing presentation of an icon selection interface that displays a plurality of different expressive icons for the avatar associated with the user, the plurality of expressive icons differing in at least one of: a respective facial expression and a respective physical action; and
receiving user input selecting a particular one of the plurality of expressive icons, the selected expressive icon thereafter being indicated by the user representation data.

4. The method of claim 3, further comprising the operations of:
causing presentation of a status selection interface that displays a plurality of different status indicators, each status indicator being associated with a different respective current status for the user, and each status indicator having a respective associated direct action; and
receiving user input selecting a particular one of the plurality of status indicators, the selected status indicator thereafter being indicated by the user representation data.

5. The method of claim 4, further comprising providing an automated combined icon selection flow in which the icon selection interface and the status selection interface are automatically displayed one after another, facilitating user-selection of the expressive icon and the status indicator in combination.

6. The method of any of claims 2 to 5, wherein the status indicator comprises a text-based indication of the current status of the user.

7. The method of any of claims 2 to 6, wherein the map-based GUI is displayed on the specific client device associated with the user, the method further comprising causing display at different respective display locations in the interactive map a plurality of combined friend icons associated with respective friends of the user on the social media platform, each combined friend icon comprising both a respective expressive icon and a respective status indicator, wherein respective direct actions associated with the respective status indicators of the plurality of combined friend actions comprises two or more different direct actions.

8. The method of claim 7, further comprising:
receiving user input selecting a particular one of the plurality of combined friend icons; and
responsive to the user input, causing presentation in the map-based GUI of context information for a user associated with the selected combined friend icon.

9. The method of claim 7, further comprising:
receiving user input selecting a particular one of the plurality of combined friend icons; and
responsive to the user input, automatically initiating the respective direct action associated with the status indicator of the selected combined friend icon, wherein the direct action triggerable by selection of the selected combined friend icon is a map directions action comprising automated generation and display in the interactive map of routing information with respect to the display location of the selected combined friend icon.

10. A system comprising:
one or more computer processor devices (1002); and
a memory (1004) storing instructions that, when executed by the one or more computer processor devices, configure the system to perform operations comprising:
accessing (802) user representation data for a user of a social media platform, the user representation data indicating:
location information indicating a geographic location of a specific client device associated with the user;
a user icon configured to provide a visual representation of the user; and
a status indicator configured to provide a visual indication of a current status associated with the user, the status indicator having an associated direct action triggerable by selection of a combined icon of which it forms part, wherein the status indicator is selected from a plurality of different status indicators having different associated direct actions;
accessing (804) map data associated with the geographic location indicated by the location information;
in an automated operation based at least in part on the map data, causing (806) generation of a map-based graphical user interface, GUI, for the social media platform, the map-based GUI including an interactive map that includes the indicated geographic location;
causing (808) display on the interactive map of the combined icon visually representing the user at a display location based on the indicated geographic location, the combined icon comprising the user icon and the status indicator, thereby visually representing on the interactive map the current status; and
responsive to user selection of the combined icon, automatically initiating the direct action associated with the status indicator.

11. The system of claim 10, wherein the combined icon is a combined expressive icon in which the user icon is an expressive icon comprising an anthropomorphic avatar associated with the user, the avatar visually presenting at least one of
a distinct facial expression; and
performance of a particular physical action.

12. The system of claim 11, wherein the instructions further configure the system to perform the prior operations of:
causing presentation of an icon selection interface that displays a plurality of different expressive icons for the avatar associated with the user, the plurality of expressive icons differing in at least one of: a respective facial expression and a respective physical action; and
receiving user input selecting a particular one of the plurality of expressive icons, the selected expressive icon thereafter being indicated by the user representation data;
wherein the instructions further configure the system to perform the operations of:
causing presentation of a status selection interface that displays a plurality of different status indicators, each status indicator being associated with a different respective current status for the user, and each status indicator having a respective associated direct action; and
receiving user input selecting a particular one of the plurality of status indicators, the selected status indicator thereafter being indicated by the user representation data.

13. The system of claim 12, wherein the map-based GUI is displayed on the specific client device associated with the user, and wherein the instructions further configure the system to cause display at different respective display locations in the interactive map of a plurality of combined friend icons associated with respective friends of the user on the social media platform, each combined friend icon comprising both a respective expressive icon and a respective status indicator, wherein respective direct actions associated with the respective status indicators of the plurality of combined friend actions comprises two or more different direct actions;
wherein the instructions further configure the system to:
receive user input selecting a particular one of the plurality of combined friend icons; and
responsive to the user input, automatically initiate the respective direct action associated with the status indicator of the selected combined friend icon;
wherein the direct action triggerable by selection of the selected combined friend icon comprises launching a chat interface in the map-based GUI.

14. A non-transitory computer-readable storage medium, the computer-readable storage medium including instructions that when executed by a computer, cause the computer to perform operations comprising:
accessing (802) user representation data for a user of a social media platform, the user representation data indicating:
location information indicating a geographic location of a specific client device associated with the user;
a user icon configured to provide a visual representation of the user; and
a status indicator configured to provide a visual indication of a current status associated with the user, the status indicator having an associated direct action triggerable by selection of a combined icon of which it forms part, wherein the status indicator is selected from a plurality of different status indicators having different associated direct actions;
accessing (804) map data associated with the geographic location indicated by the location information;
in an automated operation based at least in part on the map data, causing (806) generation of a map-based graphical user interface, GUI, for the social media platform, the map-based GUI comprising an interactive map that includes the indicated geographic location;
causing (808) display on the interactive map of the combined icon visually representing the user at a display location based on the indicated geographic location, the combined icon comprising the user icon and the status indicator; and
responsive to user selection of the combined icon, automatically initiating the direct action associated with the status indicator

## Patentansprüche

1. Ein Verfahren, das Folgendes umfasst:
Zugreifen (802) auf Benutzerdarstellungsdaten für einen Benutzer einer sozialen Medienplattform, wobei die Benutzerdarstellungsdaten Folgendes angeben:
Ortsinformationen, die einen geografischen Ort einer mit dem Benutzer assoziierten spezifischen Clientvorrichtung angeben;
ein Benutzersymbol, das dazu konfiguriert ist, eine visuelle Darstellung des Benutzers bereitzustellen; und
einen Statusindikator, der dazu konfiguriert ist, eine visuelle Angabe eines mit dem Benutzer assoziierten aktuellen Status bereitzustellen, wobei der Statusindikator eine assoziierte direkte Aktion aufweist, die durch Auswahl eines kombinierten Symbols, zu dem dieser gehört, auslösbar ist, wobei der Statusindikator aus einer Vielzahl von unterschiedlichen Statusindikatoren ausgewählt wird, die unterschiedliche assoziierte direkte Aktionen aufweisen;
Zugreifen (804) auf Kartendaten, die mit dem durch die Ortsinformationen angegebenen geografischen Ort assoziiert sind;
in einer automatisierten Operation, mindestens basierend auf den Kartendaten und durchgeführt unter Verwendung von einer oder mehreren Rechnerprozessorvorrichtungen, die dafür konfiguriert sind, Veranlassen (806) der Generierung einer kartenbasierten grafischen Benutzerschnittstelle, GUI, für die soziale Medienplattform, wobei die kartenbasierte GUI eine interaktive Karte umfasst, die den angegebenen geografischen Ort einschließt;
Veranlassen (808) einer Anzeige auf der interaktiven Karte des kombinierten Symbols, das den Benutzer an einem Anzeigeort basierend auf dem angegebenen geografischen Ort visuell darstellt, wobei das kombinierte Symbol das Benutzersymbol und den Statusindikator umfasst; und
reagierend auf die Benutzerauswahl des kombinierten Symbols, automatisches Initiieren der mit dem Statusindikator assoziierten direkten Aktion.

2. Verfahren nach Anspruch 1, wobei das kombinierte Symbol ein kombiniertes expressives Symbol ist, bei dem das Benutzersymbol ein expressives Symbol ist, das einen mit dem Benutzer assoziierten anthropomorphen Avatar umfasst, wobei der Avatar mindestens eines von Folgendem visuell darstellt:
eine distinkte Gesichtsexpression; und
Durchführung einer konkreten physischen Aktion.

3. Verfahren nach Anspruch 2, das ferner die Folgenden vorherigen Operationen umfasst:
Veranlassen einer Darstellung einer Symbolauswahlschnittstelle, die eine Vielzahl von unterschiedlichen expressiven Symbolen für den mit dem Benutzer assoziierten Avatar anzeigt, wobei sich die Vielzahl von expressiven Symbolen in mindestens einem von Folgendem unterscheiden: einer jeweiligen Gesichtsexpression und einer jeweiligen physischen Aktion; und
Empfangen einer Benutzereingabe, wodurch ein konkretes der Vielzahl von expressiven Symbolen ausgewählt wird, wobei das ausgewählte expressive Symbol danach durch die Benutzerdarstellungsdaten angegeben wird.

4. Verfahren nach Anspruch 3, das ferner die Folgenden Operationen umfasst:
Veranlassen einer Darstellung einer Statusauswahlschnittstelle, die eine Vielzahl von unterschiedlichen Statusindikatoren anzeigt, wobei jeder Statusindikator mit einem unterschiedlichen jeweiligen aktuellen Status des Benutzers assoziiert ist und jeder Statusindikator eine jeweilige assoziierte direkte Aktion aufweist; und
Empfangen einer Benutzereingabe, wodurch ein konkreter der Vielzahl von Statusindikatoren ausgewählt wird, wobei der ausgewählte Statusindikator danach durch die Benutzerdarstellungsdaten angegeben wird.

5. Verfahren nach Anspruch 4, das ferner das Bereitstellen eines automatisierten kombinierten Symbolauswahlflusses umfasst, worin die Symbolauswahlschnittstelle und die Statusauswahlschnittstelle automatisch hintereinander angezeigt werden, wodurch eine Benutzerauswahl des expressiven Symbols und des Statusindikators in Kombination erleichtert wird.

6. Verfahren nach einem der Ansprüche 2 bis 5, wobei der Statusindikator eine textbasierte Angabe des aktuellen Status des Benutzers umfasst.

7. Verfahren nach einem der Ansprüche 2 bis 6, wobei die kartenbasierte GUI auf der mit dem Benutzer assoziierten spezifischen Clientvorrichtung angezeigt wird, wobei das Verfahren ferner das Veranlassen einer Anzeige an unterschiedlichen jeweiligen Anzeigeorten in der interaktiven Karte einer Vielzahl von kombinierten Freundsymbolen, die mit jeweiligen Freunden des Benutzers auf der sozialen Medienplattform assoziiert sind, umfasst, wobei jedes kombinierte Freundsymbol sowohl ein jeweiliges expressives Symbol als auch einen jeweiligen Statusindikator umfasst, wobei jeweilige mit den jeweiligen Statusindikatoren der Vielzahl von kombinierten Freundaktionen assoziierte direkte Aktionen zwei oder mehr unterschiedliche direkte Aktionen umfassen.

8. Verfahren nach Anspruch **7,** das ferner Folgendes umfasst:
Empfangen einer Benutzereingabe, wodurch ein konkretes der Vielzahl von kombinierten Freundsymbole ausgewählt wird; und
reagierend auf die Benutzereingabe, Veranlassen einer Darstellung in der kartenbasierten GUI von Kontextinformationen für einen mit dem ausgewählten kombinierten Freundsymbol assoziierten Benutzer.

9. Verfahren nach Anspruch 7, das ferner Folgendes umfasst:
Empfangen einer Benutzereingabe, wodurch ein konkretes der Vielzahl von kombinierten Freundsymbole ausgewählt wird; und
reagierend auf die Benutzereingabe, automatisches Initiieren der jeweiligen mit dem Statusindikator des ausgewählten kombinierten Freundsymbols assoziierten direkten Aktion, wobei die direkte Aktion, die durch Auswahl des ausgewählten kombinierten Freundsymbols auslösbar ist, eine Kartenrichtungsaktion ist, die eine automatisierte Generierung und Anzeige in der interaktiven Karte von Routinginformationen in Bezug auf den Anzeigeort des ausgewählten kombinierten Freundsymbols umfasst.

10. Ein System, das Folgendes umfasst:
eine oder mehrere Computerprozessorvorrichtungen (1002); und
einen Speicher (1004), der Anweisungen speichert, die, wenn sie von der einen oder den mehreren Rechnerprozessorvorrichtungen ausgeführt werden, das System dazu konfigurieren, Operationen durchzuführen, die Folgendes umfassen:
Zugreifen (802) auf Benutzerdarstellungsdaten für einen Benutzer einer sozialen Medienplattform, wobei die Benutzerdarstellungsdaten Folgendes angeben:
Ortsinformationen, die einen geografischen Ort einer mit dem Benutzer assoziierten spezifischen Clientvorrichtung angeben;
ein Benutzersymbol, das dazu konfiguriert ist, eine visuelle Darstellung des Benutzers bereitzustellen; und
einen Statusindikator, der dazu konfiguriert ist, eine visuelle Angabe eines mit dem Benutzer assoziierten aktuellen Status bereitzustellen, wobei der Statusindikator eine assoziierte direkte Aktion aufweist, die durch Auswahl eines kombinierten Symbols, zu dem dieser gehört, auslösbar ist, wobei der Statusindikator aus einer Vielzahl von unterschiedlichen Statusindikatoren ausgewählt wird, die unterschiedliche assoziierte direkte Aktionen aufweisen;
Zugreifen (804) auf Kartendaten, die mit dem durch die Ortsinformationen angegebenen geografischen Ort assoziiert sind;
in einer automatisierten Operation, mindestens basierend auf den Kartendaten, Veranlassen (806) der Generierung einer kartenbasierten grafischen Benutzerschnittstelle, GUI, für die soziale Medienplattform, wobei die kartenbasierte GUI eine interaktive Karte einschließt, die den angegebenen geografischen Ort einschließt;
Veranlassen (808) einer Anzeige auf der interaktiven Karte des kombinierten Symbols, das den Benutzer an einem Anzeigeort basierend auf dem angegebenen geografischen Ort visuell darstellt, wobei das kombinierte Symbol das Benutzersymbol und den Statusindikator umfasst, wodurch auf der interaktiven Karte der aktuelle Status visuell dargestellt wird; und
reagierend auf die Benutzerauswahl des kombinierten Symbols, automatisches Initiieren der mit dem Statusindikator assoziierten direkten Aktion.

11. System nach Anspruch 10, wobei das kombinierte Symbol ein kombiniertes expressives Symbol ist, bei dem das Benutzersymbol ein expressives Symbol ist, das einen mit dem Benutzer assoziierten anthropomorphen Avatar umfasst, wobei der Avatar mindestens eines von Folgendem visuell darstellt:
eine distinkte Gesichtsexpression; und
Durchführung einer konkreten physischen Aktion.

12. System nach Anspruch 11, wobei die Anweisungen das System ferner dazu konfigurieren, die folgenden vorherigen Operationen durchzuführen:
Veranlassen einer Darstellung einer Symbolauswahlschnittstelle, die eine Vielzahl von unterschiedlichen expressiven Symbolen für den mit dem Benutzer assoziierten Avatar anzeigt, wobei sich die Vielzahl von expressiven Symbolen in mindestens einem von Folgendem unterscheiden: einer jeweiligen Gesichtsexpression und einer jeweiligen physischen Aktion; und
Empfangen einer Benutzereingabe, wodurch ein konkretes der Vielzahl von expressiven Symbolen ausgewählt wird, wobei das ausgewählte expressive Symbol danach durch die Benutzerdarstellungsdaten angegeben wird;
wobei die Anweisungen das System ferner dazu konfigurieren, die folgenden Operationen durchzuführen:
Veranlassen einer Darstellung einer Statusauswahlschnittstelle, die eine Vielzahl von unterschiedlichen Statusindikatoren anzeigt, wobei jeder Statusindikator mit einem unterschiedlichen jeweiligen aktuellen Status des Benutzers assoziiert ist und jeder Statusindikator eine jeweilige assoziierte direkte Aktion aufweist; und
Empfangen einer Benutzereingabe, wodurch ein konkreter der Vielzahl von Statusindikatoren ausgewählt wird, wobei der ausgewählte Statusindikator danach durch die Benutzerdarstellungsdaten angegeben wird.

13. System nach Anspruch 12, wobei die kartenbasierte GUI auf der mit dem Benutzer assoziierten spezifischen Clientvorrichtung angezeigt wird und wobei die Anweisungen das System ferner dazu konfigurieren, Folgendes zu veranlassen: Anzeige an unterschiedlichen jeweiligen Anzeigeorten in der interaktiven Karte einer Vielzahl von kombinierten Freundsymbolen, die mit jeweiligen Freunden des Benutzers auf der sozialen Medienplattform assoziiert sind, wobei jedes kombinierte Freundsymbol sowohl ein jeweiliges expressives Symbol als auch einen jeweiligen Statusindikator umfasst, wobei jeweilige mit den jeweiligen Statusindikatoren der Vielzahl von kombinierten Freundaktionen assoziierte direkte Aktionen zwei oder mehr unterschiedliche direkte Aktionen umfassen;
wobei die Anweisungen das System ferner zu Folgendem konfigurieren:
Empfangen einer Benutzereingabe, wodurch ein konkretes der Vielzahl von kombinierten Freundsymbole ausgewählt wird; und
reagierend auf die Benutzereingabe, automatisches Initiieren der jeweiligen mit dem Statusindikator des ausgewählten kombinierten Freundsymbols assoziierten direkten Aktion;
wobei die direkte Aktion, die durch Auswahl des ausgewählten kombinierten Freundsymbols auslösbar ist, das Starten einer Chat-Schnittstelle in der kartenbasierten GUI umfasst.

14. Ein nicht transitorisches, rechnerlesbares Speicherungsmedium, wobei das rechnerlesbare Speicherungsmedium Anweisungen einschließt, die, wenn sie von einem Rechner ausgeführt werden, den Rechner veranlassen, Operationen durchzuführen, die Folgendes umfassen:
Zugreifen (802) auf Benutzerdarstellungsdaten für einen Benutzer einer sozialen Medienplattform, wobei die Benutzerdarstellungsdaten Folgendes angeben:
Ortsinformationen, die einen geografischen Ort einer mit dem Benutzer assoziierten spezifischen Clientvorrichtung angeben;
ein Benutzersymbol, das dazu konfiguriert ist, eine visuelle Darstellung des Benutzers bereitzustellen; und
einen Statusindikator, der dazu konfiguriert ist, eine visuelle Angabe eines mit dem Benutzer assoziierten aktuellen Status bereitzustellen, wobei der Statusindikator eine assoziierte direkte Aktion aufweist, die durch Auswahl eines kombinierten Symbols, zu dem dieser gehört, auslösbar ist, wobei der Statusindikator aus einer Vielzahl von unterschiedlichen Statusindikatoren ausgewählt wird, die unterschiedliche assoziierte direkte Aktionen aufweisen;
Zugreifen (804) auf Kartendaten, die mit dem durch die Ortsinformationen angegebenen geografischen Ort assoziiert sind;
in einer automatisierten Operation, mindestens basierend auf den Kartendaten, Veranlassen (806) der Generierung einer kartenbasierten grafischen Benutzerschnittstelle, GUI, für die soziale Medienplattform, wobei die kartenbasierte GUI eine interaktive Karte umfasst, die den angegebenen geografischen Ort einschließt;
Veranlassen (808) einer Anzeige auf der interaktiven Karte des kombinierten Symbols, das den Benutzer an einem Anzeigeort basierend auf dem angegebenen geografischen Ort visuell darstellt, wobei das kombinierte Symbol das Benutzersymbol und den Statusindikator umfasst; und
reagierend auf die Benutzerauswahl des kombinierten Symbols, automatisches Initiieren der mit dem Statusindikator assoziierten direkten Aktion.

## Revendications

1. Procédé comprenant :
le fait d'accéder (802) à des données de représentation d'utilisateur pour un utilisateur d'une plate-forme de médias sociaux, les données de représentation d'utilisateur indiquant :
des informations de localisation indiquant une localisation géographique d'un dispositif client spécifique associé à l'utilisateur ;
une icône d'utilisateur configurée pour fournir une représentation visuelle de l'utilisateur ; et
un indicateur de statut configuré pour fournir une indication visuelle d'un statut actuel associé à l'utilisateur, l'indicateur de statut ayant une action directe associée apte à être déclenchée par la sélection d'une icône combinée dont elle fait partie, où l'indicateur de statut est sélectionné parmi une pluralité de différents indicateurs de statut ayant différentes actions directes associées ;
le fait d'accéder (804) à des données cartographiques associées à la localisation géographique indiquée par les informations de localisation ;
dans une opération automatisée basée au moins en partie sur les données cartographiques et réalisée grâce à l'utilisation d'un ou de plusieurs dispositifs à processeur informatiques configurés pour celle-ci, le fait de provoquer (806) la génération d'une interface d'utilisateur graphique, GUI, basée sur une carte pour la plate-forme de médias sociaux, la GUI basée sur une carte comprenant une carte interactive qui inclut la localisation géographique indiquée ;
le fait de provoquer (808) l'affichage, sur la carte interactive de l'icône combinée représentant visuellement l'utilisateur au niveau d'une localisation d'affichage sur la base de la localisation géographique indiquée, de l'icône combinée comprenant l'icône d'utilisateur et l'indicateur de statut ; et
en réaction à la sélection par l'utilisateur de l'icône combinée, le fait d'amorcer automatiquement l'action directe associée à l'indicateur de statut.

2. Procédé de la revendication 1, où l'icône combinée est une icône expressive combinée dans laquelle l'icône d'utilisateur est une icône expressive comprenant un avatar anthropomorphique associé à l'utilisateur, l'avatar présentant visuellement au moins une parmi :
une expression faciale distincte ; et
une réalisation d'une action physique particulière.

3. Procédé de la revendication 2, comprenant en outre les opérations antérieures :
le fait de provoquer la présentation d'une interface de sélection d'icônes qui affiche une pluralité de différentes icônes expressives pour l'avatar associé à l'utilisateur, la pluralité d'icônes expressives différant en au moins un élément parmi : une expression faciale respective et une action physique respective ; et
le fait de recevoir une saisie d'utilisateur sélectionnant une icône particulière de la pluralité d'icônes expressives, l'icône expressive sélectionnée étant indiquée par la suite par les données de représentation d'utilisateur.

4. Procédé de la revendication 3, comprenant en outre les opérations :
le fait de provoquer la présentation d'une interface de sélection de statuts qui affiche une pluralité de différents indicateurs de statut, chaque indicateur de statut étant associé à un différent statut actuel respectif pour l'utilisateur, et chaque indicateur de statut ayant une action directe associée respective ; et
le fait de recevoir une saisie d'utilisateur sélectionnant un indicateur particulier de la pluralité d'indicateurs de statut, l'indicateur de statut sélectionné étant indiqué par la suite par les données de représentation d'utilisateur.

5. Procédé de la revendication 4, comprenant en outre le fait de fournir un flux automatisé de sélection d'icônes combinées dans lequel l'interface de sélection d'icônes et l'interface de sélection de statuts sont affichées automatiquement l'une après l'autre, ce qui facilite la sélection par l'utilisateur de l'icône expressive et de l'indicateur de statut en combinaison.

6. Procédé de n'importe lesquelles des revendications 2 à 5, où l'indicateur de statut comprend une indication, basée sur du texte, du statut actuel de l'utilisateur.

7. Procédé de n'importe lesquelles des revendications 2 à 6, où la GUI basée sur une carte est affichée sur le dispositif client spécifique associé à l'utilisateur, le procédé comprenant en outre le fait de provoquer l'affichage, au niveau de différentes localisations d'affichage respectives dans la carte interactive, d'une pluralité d'icônes d'amis/es combinées associées à des amis/es respectifs/ves de l'utilisateur sur la plate-forme de médias sociaux, chaque icône d'ami/e combinée comprenant à la fois une icône expressive respective et un indicateur de statut respectif, où des actions directes respectives associées aux indicateurs de statut respectifs de la pluralité d'actions d'amis/es combinées comprennent deux ou plusieurs actions directes différentes.

8. Procédé de la revendication 7, comprenant en outre :
le fait de recevoir une saisie d'utilisateur sélectionnant une icône particulière de la pluralité d'icônes d'amis/es combinées ; et
en réaction à la saisie d'utilisateur, le fait de provoquer la présentation, dans la GUI basée sur une carte, d'informations contextuelles pour un utilisateur associé à l'icône d'ami/e combinée sélectionnée.

9. Procédé de la revendication 7, comprenant en outre :
le fait de recevoir une saisie d'utilisateur sélectionnant une icône particulière de la pluralité d'icônes d'ami/e combinées ; et
en réaction à la saisie d'utilisateur, le fait d'amorcer automatiquement l'action directe respective associée à l'indicateur de statut de l'icône d'ami/e combinée sélectionnée, où l'action directe apte à être déclenchée par la sélection de l'icône d'ami/e combinée sélectionnée est une action de directions cartographiques comprenant la génération et l'affichage automatisés/es, dans la carte interactive, d'informations d'itinéraire par rapport à la localisation d'affichage de l'icône d'ami/e combinée sélectionnée.

10. Système comprenant :
un ou plusieurs dispositifs à processeur informatiques (1002) ; et
une mémoire (1004) stockant des instructions qui, lorsqu'elles sont exécutées par les un ou plusieurs dispositifs à processeur informatiques, configurent le système pour réaliser les opérations comprenant :
le fait d'accéder (802) à des données de représentation d'utilisateur pour un utilisateur d'une plate-forme de médias sociaux, les données de représentation d'utilisateur indiquant :
des informations de localisation indiquant une localisation géographique d'un dispositif client spécifique associé à l'utilisateur ;
une icône d'utilisateur configurée pour fournir une représentation visuelle de l'utilisateur ; et
un indicateur de statut configuré pour fournir une indication visuelle d'un statut actuel associé à l'utilisateur, l'indicateur de statut ayant une action directe associée apte à être déclenchée par la sélection d'une icône combinée dont elle fait partie, où l'indicateur de statut est sélectionné parmi une pluralité de différents indicateurs de statut ayant différentes actions directes associées ;
le fait d'accéder (804) à des données cartographiques associées à la localisation géographique indiquée par les informations de localisation ;
dans une opération automatisée basée au moins en partie sur les données cartographiques, le fait de provoquer (806) la génération d'une interface d'utilisateur graphique, GUI, basée sur une carte pour la plate-forme de médias sociaux, la GUI basée sur une carte comprenant une carte interactive qui inclut la localisation géographique indiquée ;
le fait de provoquer (808) l'affichage, sur la carte interactive de l'icône combinée représentant visuellement l'utilisateur au niveau d'une localisation d'affichage sur la base de la localisation géographique indiquée, de l'icône combinée comprenant l'icône d'utilisateur et l'indicateur de statut, permettant ainsi de représenter visuellement sur la carte interactive le statut actuel ; et
en réaction à la sélection par l'utilisateur de l'icône combinée, le fait d'amorcer automatiquement l'action directe associée à l'indicateur de statut.

11. Système de la revendication 10, où l'icône combinée est une icône expressive combinée dans laquelle l'icône d'utilisateur est une icône expressive comprenant un avatar anthropomorphique associé à l'utilisateur, l'avatar présentant visuellement au moins une parmi :
au moins une expression faciale distincte ; et
une réalisation d'une action physique particulière.

12. Système de la revendication 11, où les instructions configurent en outre le système de façon à réaliser les opérations antérieures :
le fait de provoquer la présentation d'une interface de sélection d'icônes qui affiche une pluralité de différentes icônes expressives pour l'avatar associé à l'utilisateur, la pluralité d'icônes expressives différant en au moins un élément parmi : une expression faciale respective et une action physique respective ; et
le fait de recevoir une saisie d'utilisateur sélectionnant une icône particulière de la pluralité d'icônes expressives, l'icône expressive sélectionnée étant indiquée par la suite par les données de représentation d'utilisateur ;
où les instructions configurent en outre le système de façon à réaliser les opérations :
le fait de provoquer la présentation d'une interface de sélection de statuts qui affiche une pluralité de différents indicateurs de statut, chaque indicateur de statut étant associé à un différent statut actuel respectif pour l'utilisateur, et chaque indicateur de statut ayant une action directe associée respective ; et
le fait de recevoir une saisie d'utilisateur sélectionnant un indicateur particulier de la pluralité d'indicateurs de statut, l'indicateur de statut sélectionné étant indiqué par la suite par les données de représentation d'utilisateur.

13. Système de la revendication 12, où la GUI basée sur une carte est affichée sur le dispositif client spécifique associé à l'utilisateur, et où les instructions configurent en outre le système de façon à provoquer l'affichage au niveau de différentes localisations d'affichage respectives dans la carte interactive, d'une pluralité d'icônes d'amis/es combinées associées à des amis/es respectifs/ves de l'utilisateur sur la plate-forme de médias sociaux, chaque icône d'ami/e combinée comprenant à la fois une icône expressive respective et un indicateur de statut respectif, où des actions directes respectives associées aux indicateurs de statut respectifs de la pluralité d'actions d'amis/es combinées comprennent deux ou plusieurs actions directes différentes ;
où les instructions configurent en outre le système pour :
recevoir une saisie d'utilisateur sélectionnant une icône particulière de la pluralité d'icônes d'amis/es combinées ; et
en réaction à la saisie d'utilisateur, amorcer automatiquement l'action directe respective associée à l'indicateur de statut de l'icône d'ami/e combinée sélectionnée ;
où l'action directe apte à être déclenchée par la sélection de l'icône d'ami/e combinée sélectionnée comprend le lancement d'une interface de dialogue en ligne, ou chat, dans la GUI basée sur une carte.

14. Support de stockage non transitoire lisible par ordinateur, le support de stockage lisible par ordinateur incluant des instructions qui, lorsqu'elles sont exécutées par un ordinateur, amènent l'ordinateur à réaliser des opérations comprenant :
le fait d'accéder (802) à des données de représentation d'utilisateur pour un utilisateur d'une plate-forme de médias sociaux, les données de représentation d'utilisateur indiquant :
des informations de localisation indiquant une localisation géographique d'un dispositif client spécifique associé à l'utilisateur ;
une icône d'utilisateur configurée pour fournir une représentation visuelle de l'utilisateur ; et
un indicateur de statut configuré pour fournir une indication visuelle d'un statut actuel associé à l'utilisateur, l'indicateur de statut ayant une action directe associée apte à être déclenchée par la sélection d'une icône combinée dont elle fait partie, où l'indicateur de statut est sélectionné parmi une pluralité de différents indicateurs de statut ayant différentes actions directes associées ;
le fait d'accéder (804) à des données cartographiques associées à la localisation géographique indiquée par les informations de localisation ;
dans une opération automatisée basée au moins en partie sur les données cartographiques, le fait de provoquer (806) la génération d'une interface d'utilisateur graphique, GUI, basée sur une carte pour la plate-forme de médias sociaux, la GUI basée sur une carte comprenant une carte interactive qui inclut la localisation géographique indiquée ;
le fait de provoquer (808) l'affichage, sur la carte interactive de l'icône combinée représentant visuellement l'utilisateur au niveau d'une localisation d'affichage sur la base de la localisation géographique indiquée, de l'icône combinée comprenant l'icône d'utilisateur et l'indicateur de statut ; et
en réaction à la sélection par l'utilisateur de l'icône combinée, le fait d'amorcer automatiquement l'action directe associée à l'indicateur de statut.
